# EUROPEAN PATENT APPLICATION

(11) **EP 4 592 515 A1**
(43) Date of publication of application: **30.07.2025**
(21) Application number: 23897147.7
(22) Date of filing: 21.08.2023
(51) Int. Cl.: F02D 45/00, G01H 17/00

(54) **CONTROL DEVICE FOR INTERNAL COMBUSTION ENGINE, CONTROL METHOD FOR INTERNAL COMBUSTION ENGINE, AND PROGRAM**

(30) Priority: 28.11.2022 JP 2022189208
(71) Applicant: MITSUBISHI HEAVY INDUSTRIES ENGINE & TURBOCHARGER, LTD., Sagamihara-shi, Kanagawa 252-5293 (JP)
(72) Inventor: HASHIMOTO Naoki, Sagamihara-shi, Kanagawa 252-5293 (JP); KITAMURA Yosuke, Sagamihara-shi, Kanagawa 252-5293 (JP); TAKAYANAGI Ko, Sagamihara-shi, Kanagawa 252-5293 (JP)
(74) Representative: Hoffmann Eitle
(86) International application number: PCT/JP2023/029971
(87) International publication number: WO 2024/116487

(57) **Abstract**

The present invention comprises: a first comparison circuit that compares a threshold voltage and a first voltage signal generated from a first charge signal, which is output to a first signal line by a vibration sensor mounted to an internal combustion engine and indicates the magnitude of vibrations detected by the vibration sensor, and that outputs an output signal of a constant value if the first voltage signal exceeds the threshold voltage; a second comparison circuit that compares a threshold voltage with a second voltage signal generated from a second charge signal, which is output by the vibration sensor to a second signal line and is an inverted signal of the first charge signal, and that outputs an output signal of a constant value if the second voltage signal exceeds the threshold voltage; and a signal processing unit that detects a disconnection status between the first signal line and the second signal line on the basis of the output signals respectively output by the first comparison circuit and the second comparison circuit.

## Description

### Technical Field

The present disclosure relates to a control device for an internal combustion engine, a control method for an internal combustion engine, and a program.

Priority is claimed to Japanese Patent Application No. 2022-189208, filed November 28, 2022, the contents of which are incorporated herein by reference.

### Background Art

**In** an internal combustion engine such as an engine or a gas turbine, for example, control of advancing an ignition timing is performed in order to improve efficiency. However, in a case in which the ignition timing is simply advanced, abnormal combustion called knocking is likely to occur. Therefore, for example, a vibration sensor using a piezoelectric element called a knock sensor is used to monitor the presence or absence of the knocking, and the ignition timing is adjusted such that the efficiency can be improved in a range in which knocking does not occur (for example, refer to PTL 1).

The knock sensor is directly mounted on a cylinder head of the internal combustion engine, and is connected to an engine control unit (ECU) through a signal line. The ECU acquires a knock sensor signal output by the knock sensor through the signal line and monitors the presence or absence of the knocking by processing the acquired knock sensor signal with an internal circuit. The signal line may be disconnected due to the vibration of the internal combustion engine, and, when the signal line is disconnected, there is a problem in that it is not possible to monitor the presence or absence of the knocking in the ECU and it is not possible to adjust the ignition timing. In order to solve this problem, various techniques for detecting the disconnection of the signal line have been proposed (for example, see PTL 2).

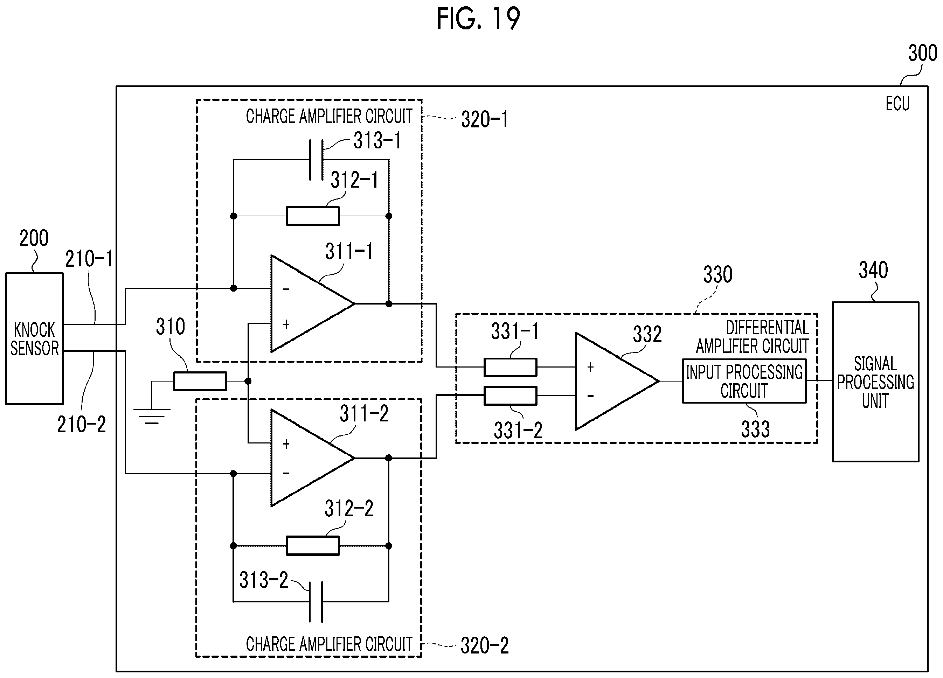

Fig. 19 is a block diagram showing an outline of the technique disclosed in PTL 1, and is a diagram showing an example of a circuit configuration of processing a knock sensor signal provided in an ECU 300. As shown in Fig. 19, a knock sensor 200 and the ECU 300 are connected to each other through two signal lines 210-1 and 210-2.

The knock sensor 200 outputs two charge signals indicating the magnitude of the vibration as the knock sensor signal. Among the two charge signals, an inverted signal in which the positive and negative of one charge signal are inverted is the other charge signal. The knock sensor 200 outputs one charge signal to the signal line 210-1, and outputs the other charge signal to the signal line 210-2. The charge signal output by the knock sensor 200 is a weak signal. Therefore, each of charge amplifier circuits 320-1 and 320-2 converts the charge signal acquired through each of the signal lines 210-1 and 210-2 connected thereto into a voltage signal proportional to the magnitude of the charge signal while amplifying the charge signal, and outputs the converted voltage signal.

A differential amplifier circuit 330 generates a differential signal of the voltage signals output by each of the charge amplifier circuits 320-1 and 320-2. The voltage signals output by the charge amplifier circuits 320-1 and 320-2 are signals in which the positive and negative are inverted. Therefore, in the differential signal output by the differential amplifier circuit 330, a state is obtained in which a difference between the two voltage signals, that is, the magnitude of the vibration detected by the knock sensor 200, appears in an emphasized manner, and noise is removed. Therefore, a signal processing unit 340 can detect the vibration detected by the knock sensor 200, that is, the magnitude of the vibration of the internal combustion engine, based on the differential signal output by the differential amplifier circuit 330.

**In** the configuration of Fig. 19, a disconnection determination method of determining a disconnection state of the signal lines 210-1 and 210-2 as described later is known. The charge signal output by the knock sensor 200 is a weak signal, and is easily affected by noise. Therefore, first, a disconnection determination section in which the vibration of the magnitude that is unlikely to be affected by noise is reliably generated in a cycle of the internal combustion engine is determined.

The signal processing unit 340 calculates a root mean square value of the differential signal output by the differential amplifier circuit 330 in the disconnection determination section, to set the calculated root mean square value as a "disconnection value". In a case in which the obtained disconnection value is smaller than a threshold value determined in advance, the signal processing unit 340 determines that the signal lines 210-1 and 210-2 are disconnected since it is estimated that the vibration that should originally occur does not occur in the disconnection determination section.

### Citation List

### Patent Literature

[PTL 1] Japanese Unexamined Patent Application Publication No. 2019-197034
[PTL 2] Japanese Unexamined Patent Application Publication No. 2021-105336

### Summary of Invention

### Technical Problem

However, in the disconnection determination method described with reference to Fig. 19, there are the following problems. For example, when any one of the signal lines 210-1 and 210-2 is disconnected, a relationship in which the charge signal captured by the charge amplifier circuit 320-1 and the charge signal captured by the charge amplifier circuit 320-2 are the inverted signals is not satisfied.

For example, an example will be assumed in which the signal line 210-1 is not disconnected, but the signal line 210-2 is disconnected. In this case, low-frequency noise caused by a power supply of the ECU 300 is superimposed only on the voltage signal output by the charge amplifier circuit 320-1 connected to the signal line 210-1 that is not disconnected. In a case in which both the signal lines 210-1 and 210-2 are not disconnected, the low-frequency noise is removed by the differential amplification by the differential amplifier circuit 330, but, in a case in which the low-frequency noise is superimposed only on one signal line, a low-frequency noise component appears in an emphasized manner by the differential amplification. In this case, when an amplitude value of the low-frequency noise is a value that is not significantly different from an amplitude value of the differential signal indicating the vibration detected by the knock sensor 200 in a non-disconnected state, the root mean square value of the low-frequency noise component may exceed the threshold value. **In** such a case, it is determined that the signal line 210-2 is not disconnected even though the signal line 210-2 is disconnected.

**In** addition, depending on whether a position at which the signal lines 210-1 and 210-2 are disconnected is a position closer to the knock sensor 200 or a position closer to the ECU 300, shapes of waveforms of the charge signals captured by the charge amplifier circuits 320-1 and 320-2 are different. In addition, depending on whether both the signal lines 210-1 and 210-2 are disconnected or any one of the signal lines 210-1 and 210-2 is disconnected, the shapes of the waveforms of the charge signals captured by the charge amplifier circuits 320-1 and 320-2 are different. In addition, due to factors in an environment in which the internal combustion engine is operated, such as moving a location of the internal combustion engine, there may be a difference in the shapes of the waveforms of the charge signals captured by the charge amplifier circuits 320-1 and 320-2.

The difference in shape of these waveforms affects the amplitude value of the differential signal output by the differential amplifier circuit 330. Therefore, in the method using the disconnection value which is the root mean square value of the differential signal, when the signal processing unit 340 performs the disconnection determination based on the disconnection value, there is a problem in that, even when the disconnection determination is performed with a uniform threshold value, the disconnection determination may be made that the disconnection has occurred even though the disconnection has not occurred. Conversely, there is also a problem in that a determination may be made that the disconnection has not occurred even though the disconnection has occurred, as in the above-described case.

The present disclosure has been made to solve the above-described problems, and an object of the present disclosure is to provide a control device for an internal combustion engine, a control method for an internal combustion engine, and a program, with which a disconnection state of each signal line can be accurately determined regardless of a disconnection portion of a signal line, the number of disconnected signal lines, an environment in which an internal combustion engine is operated, and the like. Solution to Problem

**In** order to achieve the above-described object, the present disclosure provides a control device for an internal combustion engine, the control device including: a first comparison circuit that compares a first voltage signal with a threshold voltage, the first voltage signal being generated from a first charge signal which is output to a first signal line by a vibration sensor mounted on an internal combustion engine and which indicates magnitude of vibration detected by the vibration sensor, and that outputs an output signal of a constant value in a case in which the first voltage signal exceeds the threshold voltage; a second comparison circuit that compares a second voltage signal with the threshold voltage, the second voltage signal being generated from a second charge signal which is output to a second signal line by the vibration sensor and which is an inverted signal of the first charge signal, and that outputs an output signal of a constant value in a case in which the second voltage signal exceeds the threshold voltage; and a signal processing unit that detects a disconnection state in the first signal line and the second signal line based on the output signal output by each of the first comparison circuit and the second comparison circuit.

The present disclosure provides a control method for an internal combustion engine, the control method including: a step of comparing a first voltage signal with a threshold voltage, the first voltage signal being generated from a first charge signal which is output to a first signal line by a vibration sensor mounted on an internal combustion engine and which indicates magnitude of vibration detected by the vibration sensor, and outputting an output signal of a constant value in a case in which the first voltage signal exceeds the threshold voltage; a step of comparing a second voltage signal with the threshold voltage, the second voltage signal being generated from a second charge signal which is output to a second signal line by the vibration sensor and which is an inverted signal of the first charge signal, and outputting an output signal of a constant value in a case in which the second voltage signal exceeds the threshold voltage; and a step of detecting a disconnection state in the first signal line and the second signal line based on the output signal output by each of the step of outputting the output signal of a constant value in a case in which the first voltage signal exceeds the threshold voltage and the step of outputting the output signal of a constant value in a case in which the second voltage signal exceeds the threshold voltage.

The present disclosure provides a program causing a computer provided in a control device for an internal combustion engine, the control device including: a first comparison circuit that compares a first voltage signal with a threshold voltage, the first voltage signal being generated from a first charge signal which is output to a first signal line by a vibration sensor mounted on an internal combustion engine and which indicates magnitude of vibration detected by the vibration sensor, and that outputs an output signal of a constant value in a case in which the first voltage signal exceeds the threshold voltage; and a second comparison circuit that compares a second voltage signal with the threshold voltage, the second voltage signal being generated from a second charge signal which is output to a second signal line by the vibration sensor and which is an inverted signal of the first charge signal, and that outputs an output signal of a constant value in a case in which the second voltage signal exceeds the threshold voltage, to function as: signal processing means for detecting a disconnection state in the first signal line and the second signal line based on the output signal output by each of the first comparison circuit and the second comparison circuit.

### Advantageous Effects of Invention

With the control device for the internal combustion engine, the control method for the internal combustion engine, and the program, with which the disconnection state of each signal line can be accurately determined regardless of the disconnection portion of the signal line, the number of disconnected signal lines, the environment in which the internal combustion engine is operated, and the like.

### Brief Description of Drawings

Fig. 1 is a schematic block diagram showing a configuration example of an internal combustion engine control system according to a first embodiment of the present disclosure.
Fig. 2 is a diagram showing a circuit configuration example of an ECU according to the first embodiment of the present disclosure.
Fig. 3 is a diagram showing an example of an output voltage signal of a charge amplifier circuit and an output voltage signal of a filter circuit according to the first embodiment of the present disclosure.
Fig. 4 is a diagram showing an example of the output voltage signal of the charge amplifier circuit according to the first embodiment of the present disclosure.
Fig. 5 is a diagram showing an example of the output voltage signal of the filter circuit according to the first embodiment of the present disclosure.
Fig. 6 is a diagram showing an example of a pulse signal showing a disconnection determination section and an example of a pulse signal output by a comparison circuit according to the first embodiment of the present disclosure.
Fig. 7 is a schematic block diagram showing an internal configuration example of a signal processing unit and a connection relationship between the signal processing unit, the comparison circuit, and a differential amplifier circuit according to the first embodiment of the present disclosure.
Fig. 8 is a diagram showing a data format example of a signal line state table according to the first embodiment of the present disclosure.
Fig. 9 is a diagram showing a data format example of an allowable counter number table according to the first embodiment of the present disclosure.
Fig. 10 is a state transition diagram showing a determination state of a signal line according to the first embodiment of the present disclosure.
Fig. 11 is a flowchart showing an operation example of a counter operation unit according to the first embodiment of the present disclosure.
Fig. 12 is a flowchart showing an operation example of a determination processing unit according to the first embodiment of the present disclosure.
Fig. 13 is a schematic block diagram showing an internal configuration example of a signal processing unit and a connection relationship between the signal processing unit, a comparison circuit, and a differential amplifier circuit according to a second embodiment of the present disclosure.
Fig. 14 is a state transition diagram showing a determination state of a signal line according to the second embodiment of the present disclosure.
Fig. 15 is a flowchart showing an operation example of a preliminary determination unit according to the second embodiment of the present disclosure.
Fig. 16 is a flowchart showing an operation example of a counter operation unit according to the second embodiment of the present disclosure.
Fig. 17 is a flowchart showing an operation example of a determination processing unit according to the second embodiment of the present disclosure.
Fig. 18 is a schematic block diagram showing a configuration of a computer according to each embodiment of the present disclosure.
Fig. 19 is a diagram showing a circuit configuration example in which magnitude of vibration is detected from a charge signal output by a knock sensor. Description of Embodiments

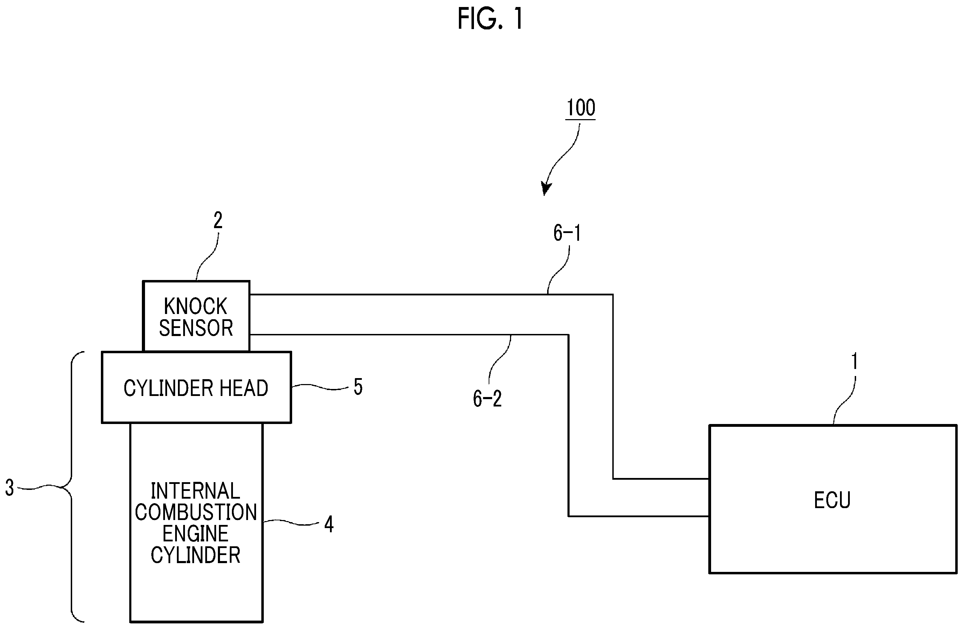

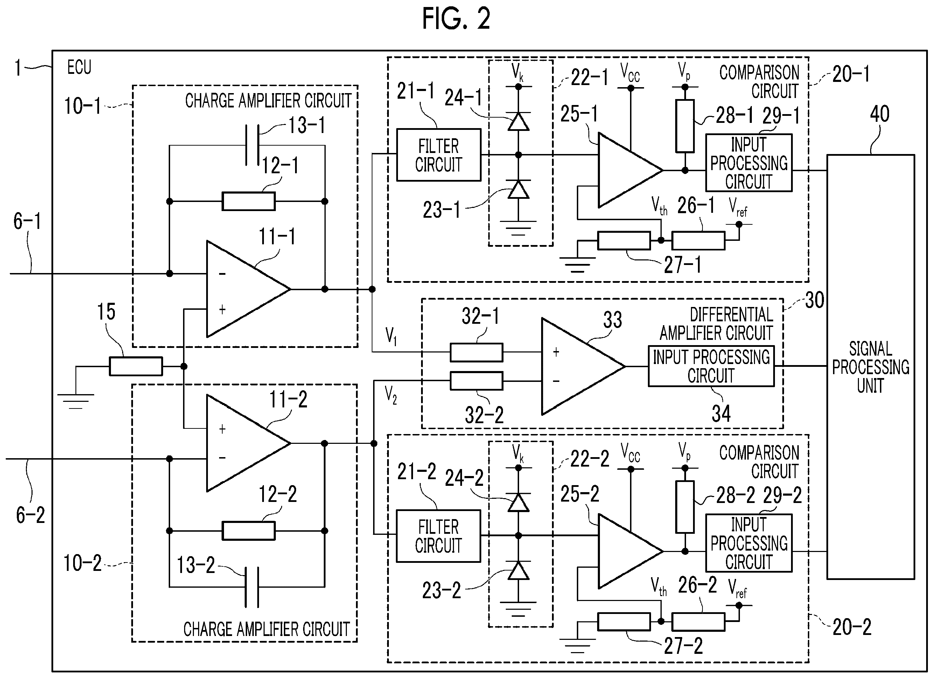

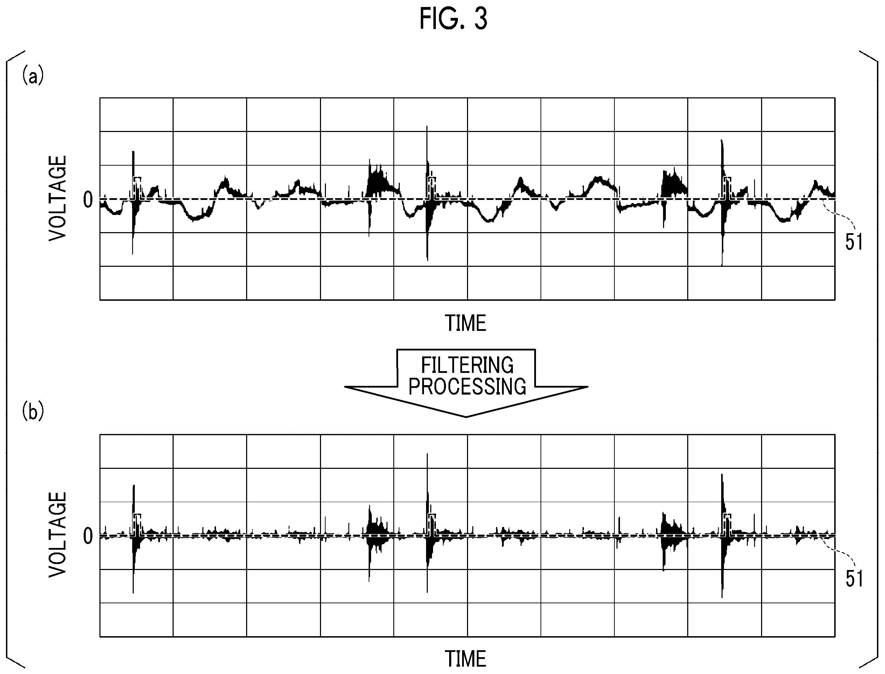

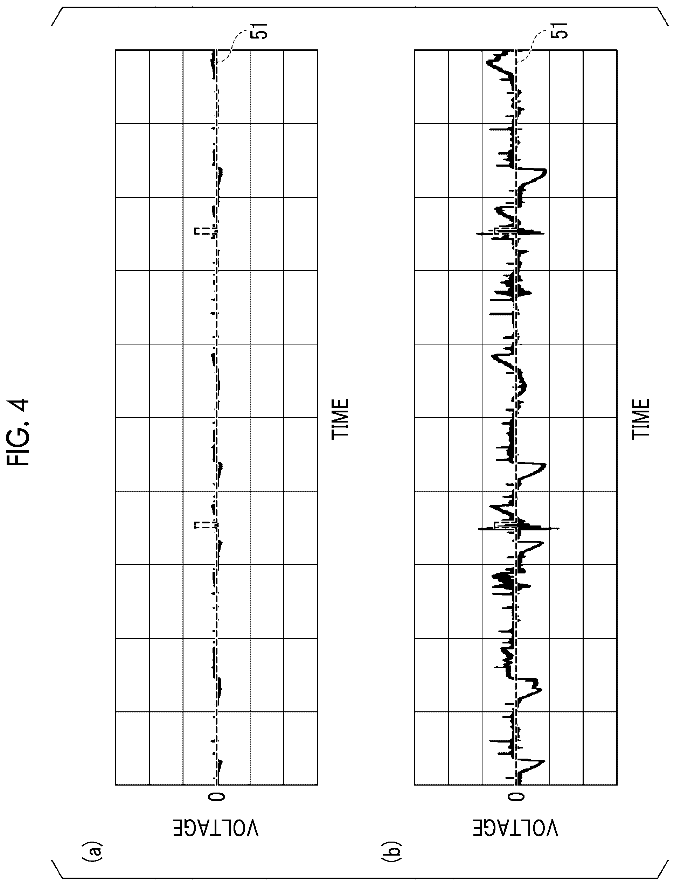

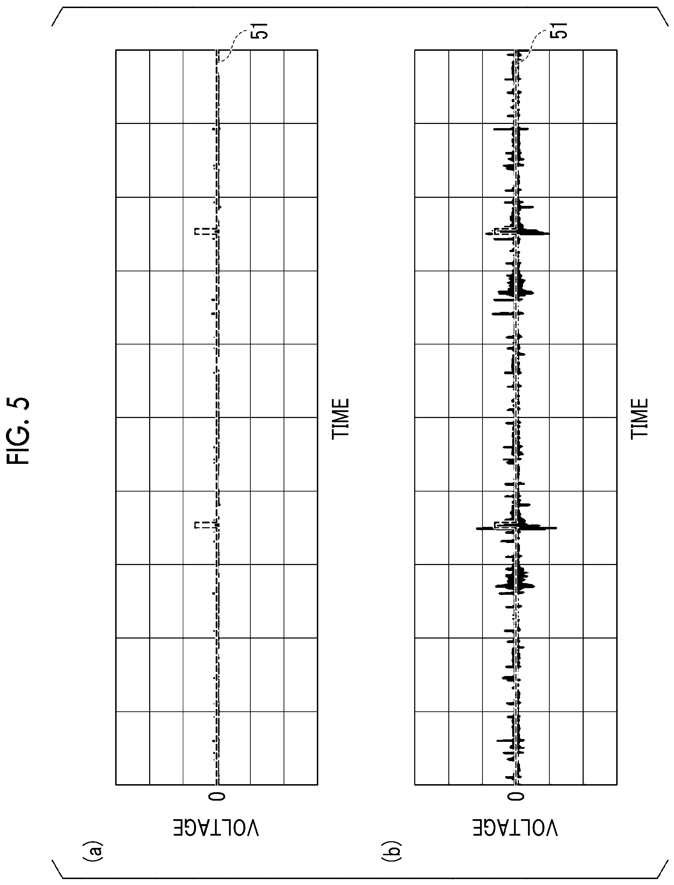

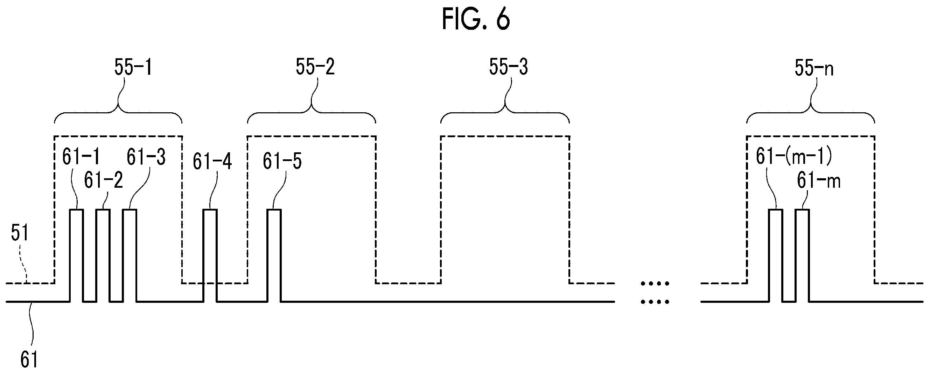

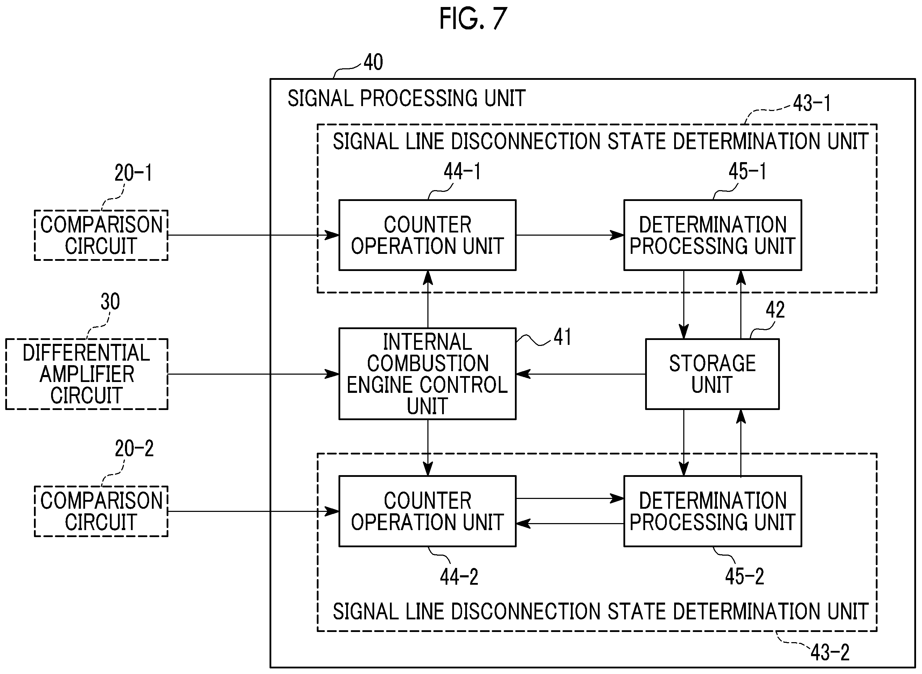

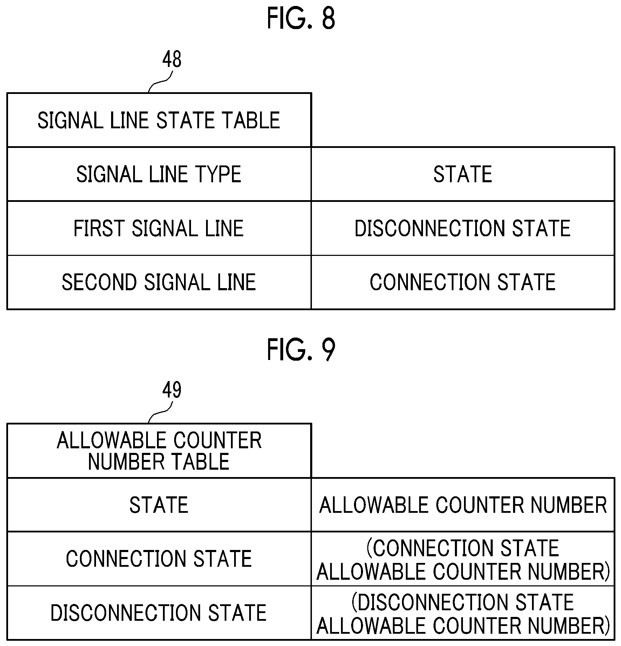

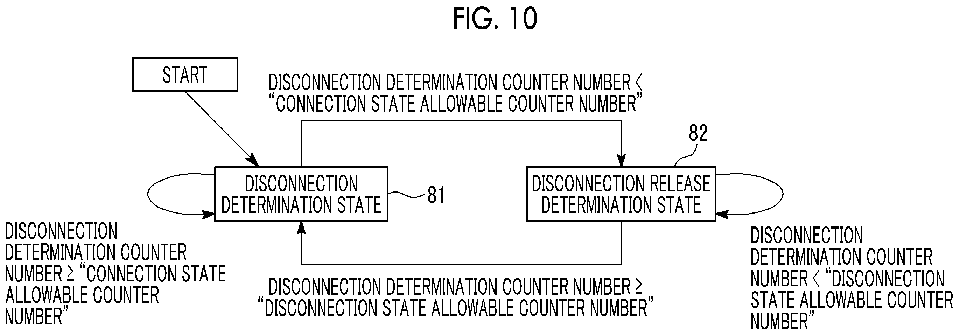

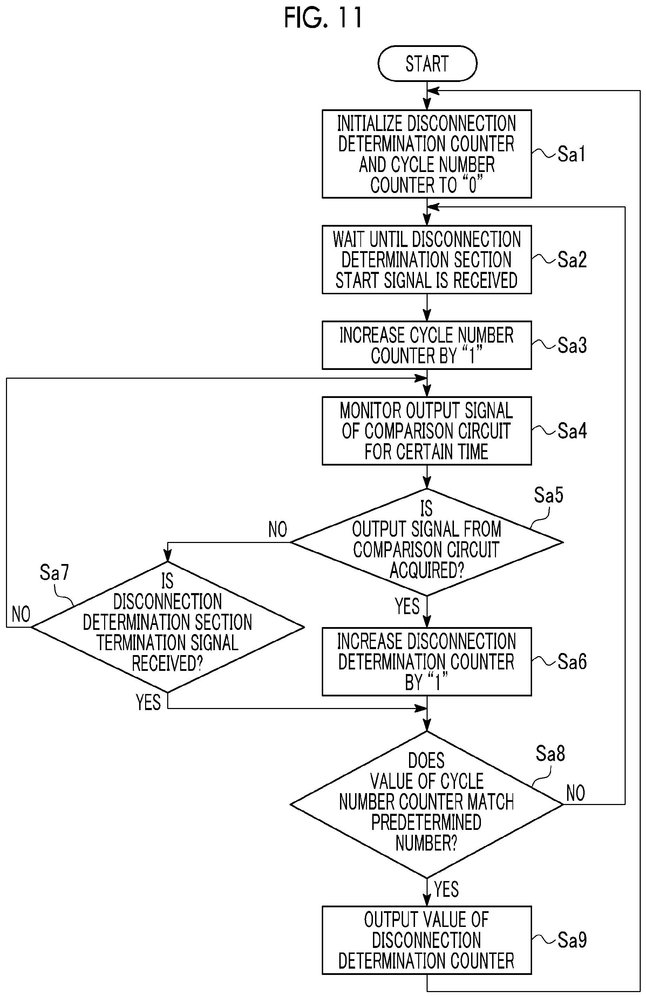

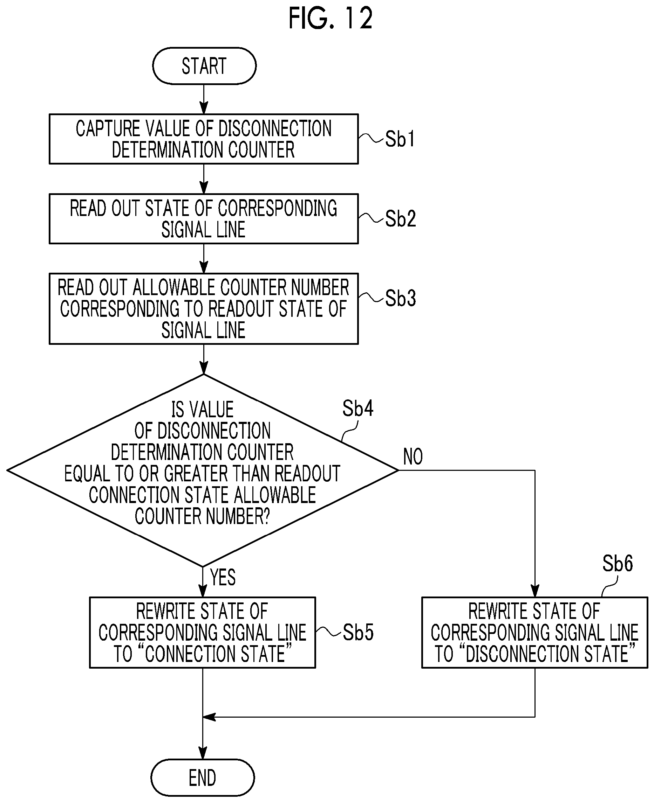

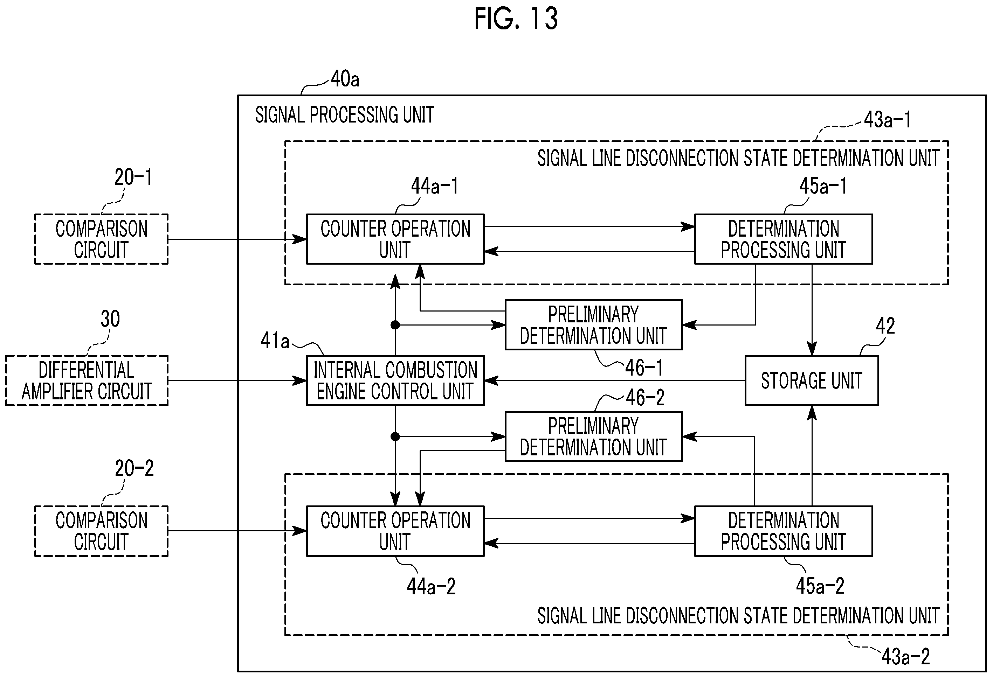

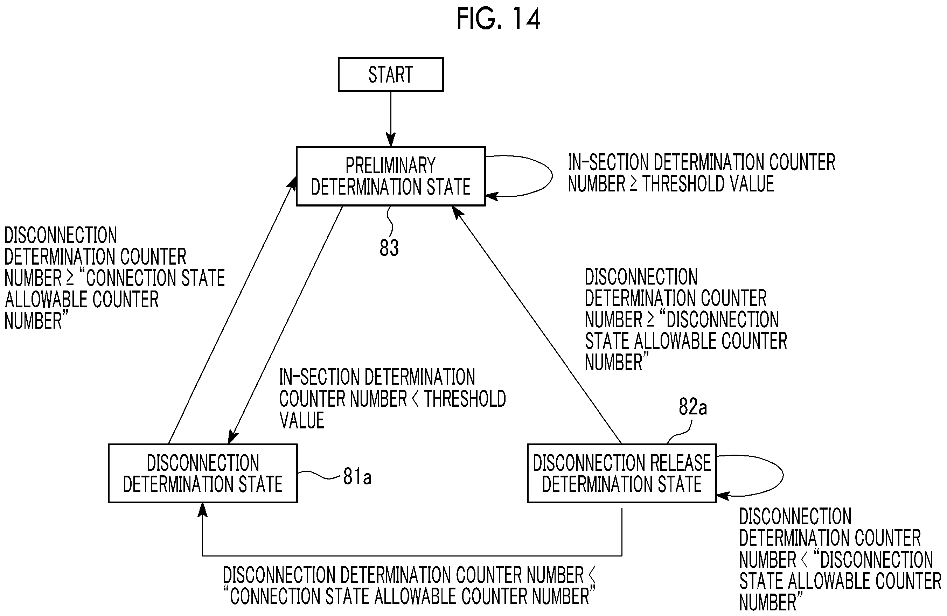

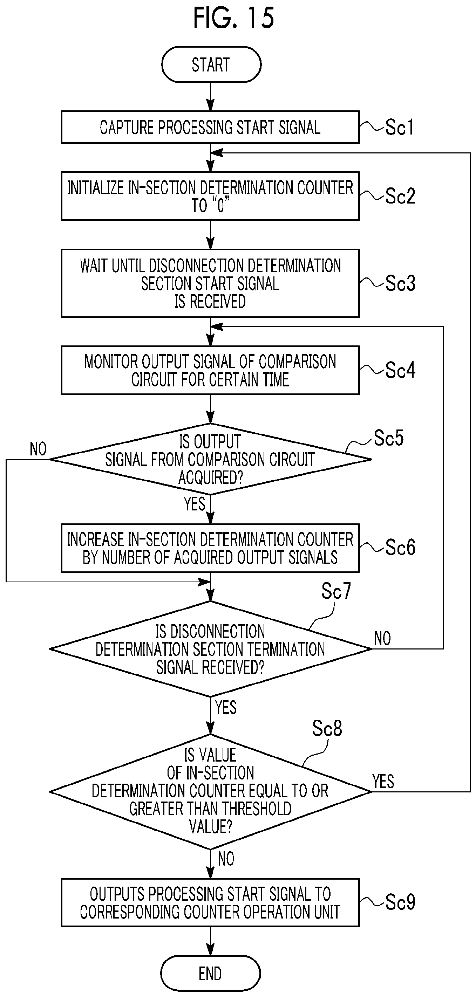

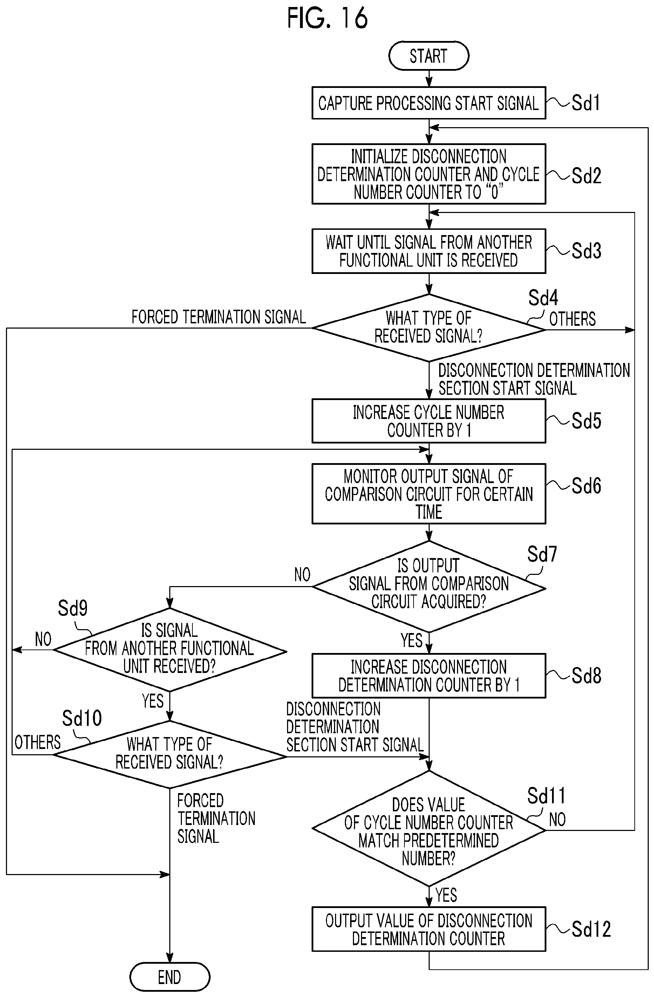

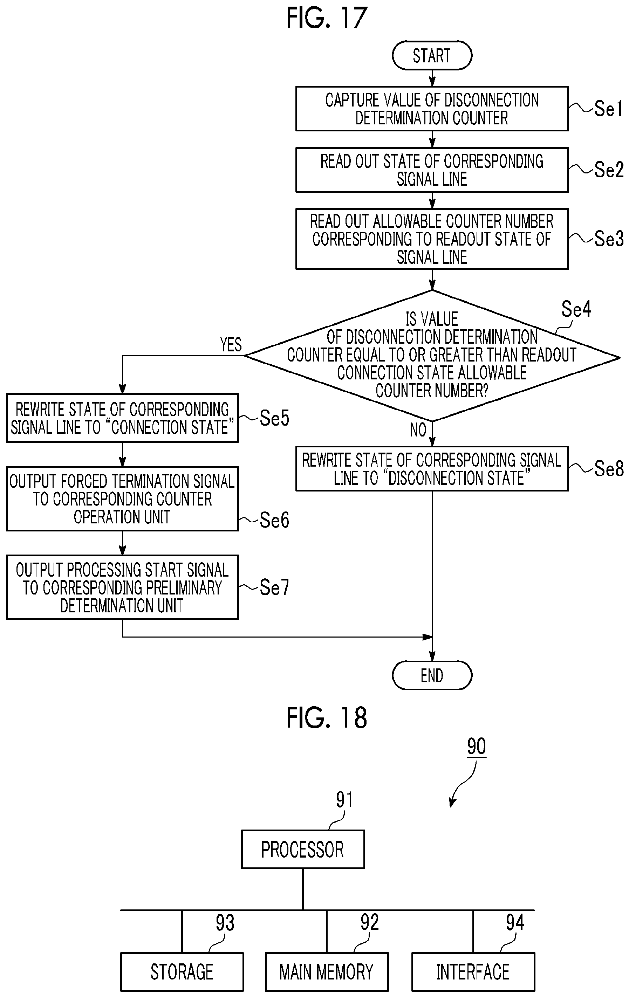

Hereinafter, a control device for an internal combustion engine, a control method for an internal combustion engine, and a program according to embodiments of the present disclosure will be described with reference to Figs. 1 to 18. Fig. 1 is a schematic block diagram showing a configuration example of an internal combustion engine control system 100 according to a first embodiment of the present disclosure. Fig. 2 is a diagram showing a circuit configuration example of an ECU 1 according to the first embodiment of the present disclosure. Fig. 3 is a diagram showing an example of output voltage signals of charge amplifier circuits 10-1 and 10-2 and output voltage signals of filter circuits 21-1 and 21-2 according to the first embodiment of the present disclosure. Fig. 4 is a diagram showing an example of the output voltage signals of the charge amplifier circuits 10-1 and 10-2 according to the first embodiment of the present disclosure. Fig. 5 is a diagram showing an example of the output voltage signals of the filter circuits 21-1 and 21-2 according to the first embodiment of the present disclosure. Fig. 6 is a diagram showing an example of a pulse signal 51 showing a disconnection determination section and an example of pulse signals 61 output by comparison circuits 20-1 and 20-2 according to the first embodiment of the present disclosure. Fig. 7 is a schematic block diagram showing an internal configuration example of a signal processing unit 40 and a connection relationship between the signal processing unit 40, the comparison circuits 20-1 and 20-2, and the differential amplifier circuit 30 according to the first embodiment of the present disclosure. Fig. 8 is a diagram showing a data format example of a signal line state table 48 according to the first embodiment of the present disclosure. Fig. 9 is a diagram showing a data format example of an allowable counter number table 49 according to the first embodiment of the present disclosure. Fig. 10 is a state transition diagram showing a determination state of signal lines 6-1 and 6-2 according to the first embodiment of the present disclosure. Fig. 11 is a flowchart showing an operation example of counter operation units 44-1 and 44-2 according to the first embodiment of the present disclosure. Fig. 12 is a flowchart showing an operation example of determination processing units 45-1 and 45-2 according to the first embodiment of the present disclosure. Fig. 13 is a schematic block diagram showing an internal configuration example of a signal processing unit 40a and a connection relationship between the signal processing unit 40a, the comparison circuits 20-1 and 20-2, and the differential amplifier circuit 30 according to a second embodiment of the present disclosure. Fig. 14 is a state transition diagram showing a determination state of the signal lines 6-1 and 6-2 according to the second embodiment of the present disclosure. Fig. 15 is a flowchart showing an operation example of preliminary determination units 46-1 and 46-2 according to the second embodiment of the present disclosure. Fig. 16 is a flowchart showing an operation example of counter operation units 44a-1 and 44a-2 according to the second embodiment of the present disclosure. Fig. 17 is a flowchart showing an operation example of determination processing units 45a-1 and 45a-2 according to the second embodiment of the present disclosure. Fig. 18 is a schematic block diagram showing a configuration of a computer 90 according to each embodiment of the present disclosure. It should be noted that, in the drawings, the same reference numerals are used to describe the same configurations, and description thereof will be omitted as appropriate.

### <First Embodiment>

### (Configuration of First Embodiment)

As shown in Fig. 1, the internal combustion engine control system 100 includes the ECU 1, a knock sensor 2, an internal combustion engine 3, and two signal lines 6-1 and 6-2 that connect the knock sensor 2 and the ECU 1. The internal combustion engine 3 is, for example, an engine or a gas turbine and includes an internal combustion engine cylinder 4 and a cylinder head 5.

The knock sensor 2 is directly mounted on the cylinder head 5. The knock sensor 2 is a vibration sensor using a piezoelectric element and detects vibration based on the same principle as an acceleration sensor. The knock sensor 2 generates two charge signals indicating the magnitude of the detected vibration as a knock sensor signal. Here, in the two charge signals, an inverted signal in which the positive and negative of one charge signal are inverted is the other charge signal. The knock sensor 2 outputs the generated one charge signal to the signal line 6-1 and outputs the generated other charge signal to the signal line 6-2.

The ECU 1 is a control device for the internal combustion engine 3. The ECU 1 acquires the two charge signals output by the knock sensor 2 through the signal lines 6-1 and 6-2, monitors a degree of vibration occurring in the internal combustion engine 3 based on the acquired two charge signals, and controls the internal combustion engine 3 based on the monitoring result. In addition, the ECU 1 detects a disconnection state of the signal lines 6-1 and 6-2 based on the acquired two charge signals.

As shown in Fig. 2, the ECU 1 includes the charge amplifier circuits 10-1 and 10-2, the comparison circuit 20-1, the differential amplifier circuit 30, a resistor 15, and the signal processing unit 40. It should be noted that, in Fig. 2, the resistor 15 is shown as not being included in the charge amplifier circuits 10-1 and 10-2. However, the resistor 15 is connected to a GND with one terminal, is connected to non-inverting input terminals of the two charge amplifier circuits 10-1 and 10-2 with the other terminal, and supplies a reference voltage to the non-inverting input terminals of the charge amplifier circuits 10-1 and 10-2. Therefore, the resistor 15 is a circuit element shared by the charge amplifier circuits 10-1 and 10-2 and may be regarded as one of the components of the charge amplifier circuits 10-1 and 10-2.

The charge amplifier circuit 10-1 includes an operational amplifier 11-1, a resistor 12-1, and a capacitor 13-1, and the signal line 6-1 is connected to an inverting input terminal of the operational amplifier 11-1. The resistors 12-1 and the capacitors 13-1 are connected in parallel to the inverting input terminal and an output terminal of the operational amplifier 11-1. The capacitor 13-1 accumulates a weak charge signal obtained through the signal line 6-1, so that the charge signal is amplified, and a voltage signal proportional to the magnitude of the charge signal is obtained. Therefore, the charge amplifier circuit 10-1 amplifies the charge signal obtained through the signal line 6-1, converts the charge signal into the voltage signal proportional to the magnitude of the charge signal, and outputs the converted voltage signal from an output terminal. Hereinafter, the voltage signal output by the charge amplifier circuit 10-1 will be referred to as a voltage signal V₁.

The charge amplifier circuit 10-2 has the same configuration as the charge amplifier circuit 10-1. That is, an operational amplifier 11-2 and the operational amplifier 11-1 have the same characteristics, a resistor 12-2 and the resistor 12-1 have the same resistance value, and a capacitor 13-2 and the capacitor 13-1 have the same capacitance. The signal line 6-2 is connected to an inverting input terminal of the operational amplifier 11-2. The charge amplifier circuit 10-2 amplifies the charge signal obtained through the signal line 6-2, converts the charge signal into the voltage signal proportional to the magnitude of the charge signal, and outputs the converted voltage signal from an output terminal. Hereinafter, the voltage signal output by the charge amplifier circuit 10-2 will be referred to as a voltage signal V₂.

The differential amplifier circuit 30 includes resistors 32-1 and 32-2, an operational amplifier 33, and an input processing circuit 34. The resistor 32-1 is connected to the output of the charge amplifier circuit 10-1 on one side and is connected to the non-inverting input terminal of the operational amplifier 33 on the other side. The resistor 32-2 is connected to the output of the charge amplifier circuit 10-2 on one side and is connected to the inverting input terminal of the operational amplifier 33 on the other side. It should be noted that a resistance value of the resistor 32-1 and a resistance value of the resistor 32-2 may be different from each other or may be the same as each other. The operational amplifier 33 generates a differential signal between the voltage signal obtained from the non-inverting input terminal and the voltage signal obtained from the inverting input terminal, amplifies the generated differential signal, and outputs the amplified differential signal from the output terminal. The input processing circuit 34 converts a voltage value of the voltage signal output from the output terminal of the operational amplifier 33 into a voltage value adapted to the signal processing unit 40, and outputs the converted voltage value. For example, in a case in which the operational amplifier 33 operates with a power supply voltage of 5 V and the signal processing unit 40 operates with a power supply voltage of 3.3 V, the input processing circuit 34 serves as a circuit that converts a voltage signal of at maximum 5 V into a voltage signal of at maximum 3.3 V.

The comparison circuit 20-1 includes the filter circuit 21-1, a clipper circuit 22-1, a comparator 25-1, resistors 26-1, 27-1, and 28-1, and an input processing circuit 29-1. The filter circuit 21-1 is connected to the output of the charge amplifier circuit 10-1, and performs filtering processing using a high-pass filter of removing low-frequency power supply noise superimposed on the voltage signal V₁ output by the charge amplifier circuit 10-1.

The clipper circuit 22-1 includes diodes 23-1 and 24-1 and cuts a negative component of the voltage signal V₁ filtered by the filter circuit 21-1. In the clipper circuit 22-1, the diode 23-1 of which one side is connected to the GND cuts the negative component, and the diode 24-1 cuts a positive component of equal to or greater than a voltage Vₖ supplied to a cathode terminal. In order to prevent the positive component from being cut, a value of the voltage Vₖ is set in advance to a value equal to or greater than a maximum value of the voltage signal output by the filter circuit 21-1.

A reference voltage V_{ref} is supplied to one terminal of the resistor 26-1, one terminal of the resistor 27-1 is connected to the other terminal of the resistor 26-1, and the other terminal of the resistor 27-1 is connected to the GND. In this manner, the reference voltage V_{ref} is divided by the resistors 26-1 and 27-1, and a threshold voltage Vₜₕ is obtained at a connection point between the resistors 26-1 and 27-1. A pull-up voltage Vₚ is supplied to one terminal of the resistor 28-1, and an output terminal of the comparator 25-1 is connected to the other terminal of the resistor 28-1. As the resistor 28-1, a resistor having a very small resistance value that can be ignored as compared with the input impedance of the input processing circuit 29-1 is applied so that a maximum voltage value supplied to the input processing circuit 29-1 can be regarded as the voltage Vₚ.

A power supply voltage V_{CC} is supplied to a main body of the comparator 25-1, one input terminal of the comparator 25-1 is connected to the clipper circuit 22-1, and a connection points between the resistors 26-1 and 27-1 is connected to the other input terminal of the comparator 25-1. That is, the voltage signal output from the clipper circuit 22-1 is supplied to one input terminal of the comparator 25-1, and the threshold voltage Vₜₕ is supplied to the other input terminal of the comparator 25-1. In a case in which the voltage signal output by the clipper circuit 22-1 exceeds the threshold voltage Vₜₕ, the comparator 25-1 sets the output to High, and in a case in which the voltage signal output by the clipper circuit 22-1 is equal to or less than the threshold voltage Vₜₕ, the comparator 25-1 sets the output to Low.

Therefore, the resistance values of the resistors 26-1 and 27-1 are determined in advance such that the voltage value of the threshold voltage Vₜₕ falls within a range of the voltage values in which the comparator 25-1 outputs Low in a case in which the disconnection has occurred in the disconnection determination section and outputs High in a case in which the disconnection has not occurred in the disconnection determination section. Here, the disconnection determination section is a section in a cycle of the internal combustion engine 3, in which the vibration of the magnitude that is unlikely to be affected by the power supply noise is reliably generated, for example, a crank angle section at the time of valve seating. It should be noted that the cycle of the internal combustion engine 3 means a combustion cycle, and one cycle is a stroke of the internal combustion engine in which one combustion occurs. In addition, the time of valve seating is a timing when an intake valve is seated, that is, the time when the intake valve is closed, and, at this timing, vibration caused by a mechanical movement when the intake valve is closed is always generated.

Accordingly, in a case in which the output of the comparator 25-1 is High, as described above, the resistance value of the resistor 28-1 is extremely small as compared with the input impedance of the input processing circuit 29-1, and thus the voltage Vₚ is supplied to the input processing circuit 29-1. In addition, in a case in which the output of the comparator 25-1 is Low, 0 [V] is supplied to the input processing circuit 29-1. That is, the pulse signal in which the voltage value is either Vₚ [V] or 0 [V] is supplied to the input terminal of the input processing circuit 29-1.

The input processing circuit 29-1 converts the voltage value of the voltage signal obtained at the input terminal into a voltage value applicable to the signal processing unit 40 and outputs the converted voltage value, similarly to the input processing circuit 34. Therefore, it can be said that the comparison circuit 20-1 is a circuit that extracts a range exceeding the threshold voltage Vₜₕ from the voltage signal V₁ from which the power supply noise and the negative component are removed, and generates a pulse signal indicating the extracted range with a width of a rectangular wave. It should be noted that, in the comparison circuit 20-1, the reference voltage V_{ref} and the voltage Vₚ may have the same voltage value, the reference voltage V_{ref} and the power supply voltage V_{CC} may have the same voltage value, the power supply voltage V_{CC} and the voltage Vₚ may have the same voltage value, or the power supply voltage V_{CC}, the reference voltage V_{ref}, and the voltage Vₚ may have the same voltage value.

The comparison circuit 20-2 has the same configuration as the comparison circuit 20-1. That is, the filter circuit 21-2 and the filter circuit 21-1, a clipper circuit 22-2 and the clipper circuit 22-1, a comparator 25-2 and the comparator 25-1, and an input processing circuit 29-2 and the input processing circuit 29-1 have the same characteristics, respectively. A resistor 26-2 and the resistor 26-1, a resistor 27-2 and the resistor 27-1, and a resistor 28-2 and the resistor 28-1 have the same resistance value, respectively.

The signal processing unit 40 detects the disconnection state in the signal lines 6-1 and 6-2 based on the pulse signals output by each of the comparison circuits 20-1 and 20-2. The signal processing unit 40 detects the vibration detected by the knock sensor 2, that is, the magnitude of the vibration of the internal combustion engine 3, based on the differential signal output by the differential amplifier circuit 30. **In** a case in which it is determined that control of the internal combustion engine 3 is required, based on the detected disconnection state or the magnitude of the vibration, the signal processing unit 40 outputs a control signal to the internal combustion engine 3 through a control signal line (not shown) connected to the internal combustion engine 3.

### (Operations of Charge Amplifier Circuit and Comparison Circuit of First Embodiment)

When the charge signal is supplied from the signal line 6-1, the charge amplifier circuit 10-1 converts the supplied charge signal into the voltage signal V₁ and outputs the converted voltage signal V₁. A voltage signal waveform shown in (a) of Fig. 3 is an example of the voltage signal V₁. It should be noted that, in (a) of Fig. 3, a vertical axis is an axis indicating the magnitude of the voltage, and a horizontal axis is an axis indicating time. It should be noted that, in (a) of Fig. 3, a pulse signal represented by a broken line indicated by reference numeral 51 is a pulse signal indicating the disconnection determination section shown for reference (hereinafter, will be referred to as a pulse signal 51), and, in the pulse signal 51, a section in a High state indicates the disconnection determination section. It should be noted that the pulse signal 51 is not the signal output by the charge amplifier circuit 10-1, and the signal processing unit 40 detects the crank angle section at the time of valve seating in the cycle of the internal combustion engine 3, that is, the disconnection determination section, to generate a signal corresponding to the pulse signal 51. Hereinafter, a vertical axis and a horizontal axis in (b) of Fig. 3, (a) and (b) of Fig. 4, and (a) and (b) of Fig. 5 are the same as those in (a) of Fig. 3, and the pulse signal 51 represented by a broken line is a pulse signal indicating the disconnection determination section in all cases.

When the voltage signal V₁ is supplied from the charge amplifier circuit 10-1, the filter circuit 21-1 of the comparison circuit 20-1 performs filtering processing using a high-pass filter of removing the low-frequency power supply noise, on the supplied voltage signal V₁. In this manner, the filter circuit 21-1 outputs a voltage signal shown in (b) of Fig. 3 in which the low-frequency power supply noise is removed from the voltage signal V₁.

The charge amplifier circuit 10-2 performs the same operation as the charge amplifier circuit 10-1, and the comparison circuit 20-2 performs the same operation as the comparison circuit 20-1, so that the voltage signal output from the filter circuit 21-2 of the comparison circuit 20-2 is a voltage signal in which the positive and negative are inverted in the voltage signal shown in (b) of Fig. 3.

(a) and (b) of Fig. 3 are examples of a case in which both the signal lines 6-1 and 6-2 are not disconnected. In contrast, in a case in which the signal line 6-1 is disconnected, and the signal line 6-2 is not disconnected, the waveform of the voltage signal V₁ output by the charge amplifier circuit 10-1 connected to the signal line 6-1 that is disconnected is a waveform shown in (a) of Fig. 4. It should be noted that (a) of Fig. 4 is an example of a case in which the signal line 6-1 is disconnected near the input terminal of the knock sensor 2. In addition, the waveform of the voltage signal V₂ output by the charge amplifier circuit 10-2 connected to the signal line 6-2 that is not disconnected is a waveform shown in (b) of Fig. 4. As shown in (a) of Fig. 4, the amplitude of the voltage signal V₁ output by the charge amplifier circuit 10-1 connected to the signal line 6-1 that is disconnected is a very small value over the entire range.

The filter circuit 21-1 filters the voltage signal V₁ shown in (a) of Fig. 4, so that a voltage signal shown in (a) of Fig. 5 is obtained. As shown in (a) of Fig. 5, the voltage signal output by the filter circuit 21-1 is substantially 0 [V] over the entire signal. Therefore, when the value of the threshold voltage Vₜₕ supplied to the comparator 25-1 is, for example, equal to or greater than a value expected as the maximum value of the voltage signal shown in (a) of Fig. 5, the input processing circuit 29-1 is in a state in which a voltage signal of 0 [V] is continuously supplied instead of the pulse signal including the rectangular wave.

The filter circuit 21-2 filters the voltage signal V₂ shown in (b) of Fig. 4, so that a voltage signal shown in (b) of Fig. 5 is obtained. When the amplitude of the voltage signal shown in (b) of Fig. 3 is compared with the amplitude of the voltage signal shown in (b) of Fig. 5, it can be seen that the following occurs. That is, as compared with the amplitude of the voltage signals output by the filter circuits 21-1 and 21-2 in a case in which both the signal lines 6-1 and 6-2 are not disconnected, the amplitude of the voltage signals output by the filter circuits 21-1 and 21-2 corresponding to the signal line 6-1 or 6-2 that is not disconnected in a case in which any one of the signal lines 6-1 and 6-2 is disconnected is smaller. That is, when one of the signal lines 6-1 and 6-2 is disconnected, the voltage of the other signal line, which is not disconnected, is attenuated.

Therefore, the threshold voltage Vₜₕ supplied to the comparators 25-1 and 25-2 needs to be determined in consideration of the magnitude of the amplitude of the voltage signals output by the clipper circuit 22-1 or 22-2 corresponding to the signal line 6-1 or 6-2 that is not disconnected in a case in which one of the signal lines 6-1 and 6-2 is disconnected. More specifically, when setting conditions of the threshold voltage Vₜₕ are organized, two setting conditions as follows can be determined. A first setting condition is a condition in which the comparators 25-1 and 25-2 always output Low in the disconnection determination section in a case in which the voltage signal from which the negative component is removed is supplied from the voltage signal shown in (a) of Fig. 5. A second setting condition is a condition in which the comparators 25-1 and 25-2 output High in a case in which there is the amplitude value corresponding to the vibration detected by the knock sensor 2 in the amplitude values of the voltage signals in the disconnection determination section among the voltage signals in which the negative component is removed from the voltage signal of (b) of Fig. 5.

By setting the threshold voltage Vₜₕ according to the above-described two setting conditions, in a case in which both the signal lines 6-1 and 6-2 are not disconnected and in a case in which one of the signal lines 6-1 and 6-2 is disconnected, the comparison circuit 20-1 or 20-2 corresponding to the signal line 6-1 or 6-2 that is not disconnected outputs, for example, a pulse signal (hereinafter, will be referred to as a pulse signal 61) as indicated by reference numeral 61 in Fig. 6. It should be noted that, in Fig. 6, a broken line indicated by reference numeral 51 is a pulse signal indicating the disconnection determination section, as in (a) of Fig. 3. Therefore, the disconnection state of the signal lines 6-1 and 6-2 can be determined depending on whether or not the rectangular wave included in the pulse signal 61 is present while the pulse signal 51 is High, that is, in the disconnection determination section.

### (Configuration of Signal Processing Unit of First Embodiment)

As shown in Fig. 7, the signal processing unit 40 includes an internal combustion engine control unit 41, a storage unit 42, and signal line disconnection state determination units 43-1 and 43-2 as the functional components configured from components that are hardware or a combination of hardware and software. The internal combustion engine control unit 41 is connected to the internal combustion engine 3 through the control signal line (not shown). The internal combustion engine control unit 41 monitors a state of the cycle of the internal combustion engine cylinder 4 based on the control signal obtained through the control signal line. The internal combustion engine control unit 41 outputs, for example, a control signal for advancing or delaying a crank angle to the internal combustion engine 3 through the control signal line. The internal combustion engine control unit 41 monitors the presence or absence of the knocking in the internal combustion engine 3, based on the differential signal output by the differential amplifier circuit 30. The internal combustion engine control unit 41 outputs a control signal related to control performed on the internal combustion engine 3 in response to the monitoring result of the presence or absence of the knocking to the internal combustion engine 3 through the control signal line. The internal combustion engine control unit 41 outputs a control signal related to control performed on the internal combustion engine 3 corresponding to information which indicates whether or not the signal lines 6-1 and 6-2 are disconnected and which is stored in the storage unit 42, to the internal combustion engine 3 through the control signal line.

The internal combustion engine control unit 41 outputs a disconnection determination section start signal indicating the start of the crank angle section at the time of valve seating obtained based on the monitoring of the state of the cycle of the internal combustion engine cylinder 4, that is, the disconnection determination section, and a disconnection determination section termination signal indicating the termination of the disconnection determination section, to the signal line disconnection state determination units 43-1 and 43-2. For example, a timing of rising of a pulse of the pulse signal 51 shown in Figs. 3 to 6 is a timing when the internal combustion engine control unit 41 outputs the disconnection determination section start signal, and a timing of falling of a pulse of the pulse signal 51 is a timing when the internal combustion engine control unit 41 outputs the disconnection determination section termination signal.

The storage unit 42 stores the signal line state table 48 shown in Fig. 8 and the allowable counter number table 49 shown in Fig. 9. The signal line state table 48 includes items of a "signal line type" and a "state", and a "first signal line" indicating the signal line 6-1 and a "second signal line" indicating the signal line 6-2 are written in advance in the "signal line type". In the item of the "state", when the signal line 6-1 or 6-2 of the corresponding "signal line type" is disconnected, a "disconnection state" is written, and when the signal line 6-1 or 6-2 of the corresponding "signal line type" is not disconnected, a "connection state" is written. It should be noted that, in an initial state, the item of the "state" is written as the "connection state" in all cases.

The allowable counter number table 49 includes items of a "state" and an "allowable counter number", and either the "connection state" or the "disconnection state" is written in advance in the item of the "state". In the item of the "allowable counter number", when the corresponding item of the "state" is "connection state", an allowable counter number applied in the connection state is written in advance, and when the corresponding item of the "state" is the "disconnection state", the allowable counter number applied in the disconnection state is written in advance. Hereinafter, the allowable counter number applied in the connection state will be referred to as a "connection state allowable counter number", and the allowable counter number applied in the disconnection state will be referred to as a "disconnection state allowable counter number".

The signal line disconnection state determination unit 43-1 includes the counter operation unit 44-1 and the determination processing unit 45-1. The counter operation unit 44-1 is connected to the comparison circuit 20-1 and the internal combustion engine control unit 41. The counter operation unit 44-1 counts the number of cycles in which at least one output signal is output from the corresponding comparison circuit 20-1 in the disconnection determination section in each of a predetermined number of consecutive cycles of the internal combustion engine 3. Here, the output signal is a rectangular wave signal (hereinafter, which referred to as a rectangular signal) included in the pulse signal output by the comparison circuit 20-1. The determination processing unit 45-1 is connected to the counter operation unit 44-1 and the storage unit 42. The determination processing unit 45-1 determines whether or not the signal line 6-1 is disconnected, based on the number of cycles counted by the counter operation unit 44-1, and the connection state allowable cycle number or the disconnection state allowable cycle number corresponding to the state of the signal line 6-1 when the determination is performed.

The signal line disconnection state determination unit 43-2 includes the counter operation unit 44-2 and the determination processing unit 45-2. The counter operation unit 44-2 has the same configuration as the counter operation unit 44-1 and is connected to the comparison circuit 20-2 and the internal combustion engine control unit 41. The determination processing unit 45-2 has the same configuration as the determination processing unit 45-1 and is connected to the counter operation unit 44-2 and the storage unit 42.

### (State Transition of Determination State of Signal Line in First Embodiment)

Fig. 10 is a state transition diagram showing a determination state for each of the signal lines 6-1 and 6-2 in the signal processing unit 40. As shown in Fig. 10, after the processing is started, the determination state of each of the signal lines 6-1 and 6-2 becomes a disconnection determination state 81, and then transitions between the disconnection determination state 81 and a disconnection release determination state 82. It should be noted that the state transition in the determination state is made independently in each of the signal lines 6-1 and 6-2, and the determination state of the signal line 6-1 and the determination state of the signal line 6-2 may be the same determination state or may be different determination states. The disconnection determination state 81 indicates that the signal lines 6-1 and 6-2 are in the connection state, and the disconnection release determination state 82 indicates that the signal lines 6-1 and 6-2 are in the disconnection state.

Hereinafter, processing of the counter operation units 44-1 and 44-2 and the determination processing units 45-1 and 45-2 will be described with reference to the flowcharts of Figs. 11 and 12. In addition, the transition to which determination state in Fig. 10 will be made in a process of the processing will be described together. It should be noted that the signal line disconnection state determination unit 43-1 and the signal line disconnection state determination unit 43-2 perform the same operation except for a difference in whether a target for the disconnection determination is the signal line 6-1 or the signal line 6-2, and, hereinafter, the operation of the signal line disconnection state determination unit 43-1 will be described.

### (Operation of Counter Operation Unit in First Embodiment)

As shown in Fig. 11, when the counter operation unit 44-1 is started up, the counter operation unit 44-1 initializes a disconnection determination counter and a cycle number counter provided in an internal storage area to "0" (Sa1). The counter operation unit 44-1 waits until the disconnection determination section start signal from the internal combustion engine control unit 41 is received (Sa2). When the counter operation unit 44-1 receives the disconnection determination section start signal from the internal combustion engine control unit 41, the counter operation unit 44-1 increases a value of the cycle number counter by "1" (Sa3). The counter operation unit 44-1 monitors the output signal of the comparison circuit 20-1 for a certain time (Sa4). Here, a certain time is, for example, a time shorter than an average time length of one disconnection determination section.

When a certain time has elapsed, the counter operation unit 44-1 determines whether or not the output signal from the comparison circuit 20-1 is acquired (Sa5). In a case in which it is determined that the output signal from the comparison circuit 20-1 is acquired (Sa5, Yes), the counter operation unit 44-1 increases a value of the disconnection determination counter by "1" (Sa6). After the processing of Sa6, the counter operation unit 44-1 advances the processing to the processing of Sa8.

On the other hand, when it is determined that the output signal from the comparison circuit 20-1 is not acquired (Sa5, No), the counter operation unit 44-1 determines whether or not the disconnection determination section termination signal from the internal combustion engine control unit 41 is received (Sa7). It should be noted that the counter operation unit 44-1 internally includes a buffer of a queue system that accumulates the disconnection determination section start signal and the disconnection determination section termination signal output by the internal combustion engine control unit 41 in an order of the reception.

It is assumed that the counter operation unit 44-1 determines that the disconnection determination section termination signal from the internal combustion engine control unit 41 is not received, with reference to the internal buffer (Sa7, No). In this case, the counter operation unit 44-1 performs the processing of and after Sa4 again. On the other hand, it is assumed that the counter operation unit 44-1 determines that the disconnection determination section termination signal from the internal combustion engine control unit 41 is received, with reference to the internal buffer (Sa7, Yes). In this case, the counter operation unit 44-1 advances the processing to the processing of Sa8.

In the processing of Sa8, the counter operation unit 44-1 determines whether or not the value of the cycle number counter matches a predetermined number determined in advance (Sa8). Here, the predetermined number is an integer value of 2 or more and, for example, a value of about "100" is determined in advance. In a case in which it is determined that the value of the cycle number counter does not match the predetermined number (Sa8, No), the counter operation unit 44-1 performs the processing of and after Sa2 again. On the other hand, in a case in which it is determined that the value of the cycle number counter matches the predetermined number (Sa8, Yes), the counter operation unit 44-1 outputs the value of the disconnection determination counter to the determination processing unit 45-1 (Sa9), and performs the processing of Sa1 again.

For example, it is assumed that the disconnection determination section indicated by the disconnection determination section start signal and the disconnection determination section termination signal output by the internal combustion engine control unit 41 is disconnection determination sections 55-1, 55-2, 55-3, ..., and 55-n shown in Fig. 6. It should be noted that, since the disconnection determination section is the crank angle section at the time of intake valve seating, one disconnection determination section is present in one cycle. Therefore, n cycles of the internal combustion engine 3 are shown in Fig. 6. It is assumed that the pulse signal output by the comparison circuit 20-1 is the pulse signal 61 in Fig. 6. In this case, in the disconnection determination section 55-1, three output signals 61-1, 61-2, and 61-3 are present as the rectangular signals included in the output signal output by the comparison circuit 20-1, that is, the pulse signal 61. Therefore, in the processing of Sa6, the counter operation unit 44-1 increases the value of the disconnection determination counter by "1". Here, a point to be noted is that, even when the three output signals 61-1, 61-2, and 61-3 are present in one disconnection determination section 55-1, the value of the disconnection determination counter is increased by only 1. In this manner, the number of cycles including at least one output signal can be counted.

In addition, in a case in which a certain time in the processing of Sa4 is, for example, a time length in which all of the output signals 61-1 to 61-3 can be acquired, the counter operation unit 44-1 acquires the three output signals 61-1, 61-2, and 61-3 in the determination processing of Sa5. In contrast, in a case in which a certain time in the processing of Sa4 is, for example, a time length for acquiring only the output signal 61-1, the counter operation unit 44-1 acquires only one output signal 61-1 in the determination processing of Sa5. In either case, in the processing of Sa5, the counter operation unit 44-1 determines whether or not at least one output signal from the comparison circuit 20-1 is acquired regardless of the number of output signals, and thus there is no difference in the determination result of Sa5. Therefore, in the processing of Sa4, it is desirable from the viewpoint of reducing the processing load that a certain time referred to is a time shorter than the average time length of one disconnection determination section and is a short time to the extent that acquisition of one output signal is expected.

In Fig. 6, since the output signal 61-4 is not included in both the disconnection determination sections 55-1 to 55-n, the output signal 61-4 is not counted by the disconnection determination counter. Since one output signal 61-5 is present in the disconnection determination section 55-2, the counter operation unit 44-1 increases the value of the disconnection determination counter by "1" in the processing of Sa6. Since there is no output signal in the disconnection determination section 55-3, the disconnection determination section 55-3 is not a target of counting performed by the disconnection determination counter. Since two output signals 61-(m-1) and 61-m are present in the disconnection determination section 55-n, the counter operation unit 44-1 increases the value of the disconnection determination counter by "1" in the processing of Sa6.

Accordingly, the value of the disconnection determination counter that is output in the processing of Sa9 by the counter operation unit 44-1 indicates the number of cycles including at least one output signal.

### (Operation of Determination Processing Unit of First Embodiment)

As described above, in the initial state, the item of the "state" of the signal line state table 48 of the storage unit 42 is the "connection state" in all cases. Therefore, in a state in which the processing performed by the determination processing unit 45-1 shown in Fig. 12 is not performed even once, the item of the "state" in the signal line state table 48 is the "connection state" in all cases. In this case, in the state transition diagram shown in Fig. 10, the determination state of the signal line 6-1 becomes the disconnection determination state 81.

The determination processing unit 45-1 is started up when the value of the disconnection determination counter from the counter operation unit 44-1 is received. The determination processing unit 45-1 captures the value of the disconnection determination counter output by the counter operation unit 44-1 (Sb1). The determination processing unit 45-1 reads out the state of the signal line 6-1, which is the signal line corresponding to the determination processing unit 45-1, that is, the first signal line, from the signal line state table 48 of the storage unit 42 (Sb2). Here, the determination processing unit 45-1 reads out the "connection state" as the state of the signal line 6-1. The determination processing unit 45-1 reads out the allowable counter number corresponding to the readout state of the signal line 6-1, from the allowable counter number table 49 of the storage unit 42 (Sb3). Here, the determination processing unit 45-1 reads out the connection state allowable counter number corresponding to the "connection state".

The determination processing unit 45-1 determines whether or not the value of the disconnection determination counter captured in the processing of Sb1 is equal to or greater than the readout connection state allowable counter number (Sb4). It is assumed that the determination processing unit 45-1 determines that the value of the disconnection determination counter is equal to or greater than the connection state allowable counter number (Sb4, Yes). In this case, the vibration that normally occurs in the disconnection determination section, that is, the crank angle section at the time of valve seating occurs, it is considered that the signal line 6-1 is connected, and the determination processing unit 45-1 rewrites the item of the "state" of the first signal line corresponding to the signal line 6-1 in the signal line state table 48 of the storage unit 42 to the "connection state" (Sb5). It should be noted that, here, the item of the "state" of the first signal line is the "connection state" before and after the rewriting. Therefore, in the state transition diagram shown in Fig. 10, the determination state of the signal line 6-1 is maintained in the disconnection determination state 81.

On the other hand, it is assumed that the determination processing unit 45-1 determines that the value of the disconnection determination counter is not equal to or greater than the connection state allowable counter number (Sb4, No). In this case, since the vibration that normally occurs in the disconnection determination section does not occur, it is considered that the signal line 6-1 is disconnected, and the determination processing unit 45-1 rewrites the item of the "state" of the first signal line corresponding to the signal line 6-1 in the signal line state table 48 of the storage unit 42 to the "disconnection state" (Sb6). It should be noted that, here, the item of the "state" of the first signal line is rewritten from the "connection state" to the "disconnection state". Therefore, in the state transition diagram shown in Fig. 10, the determination state of the signal line 6-1 transitions from the disconnection determination state 81 to the disconnection release determination state 82. For example, when the internal combustion engine control unit 41 detects that the "state" of the first signal line in the signal line state table 48 is rewritten from the "connection state" to the "disconnection state", the internal combustion engine control unit 41 notifies the outside that the signal line 6-1 is disconnected, or outputs a control signal for causing the internal combustion engine 3 to start a protection operation to be performed when the signal line is disconnected, to the internal combustion engine 3 through the control signal line.

After the processing in Sb5 and Sb6, the determination processing unit 45-1 terminates the processing and waits to receive a value of a next disconnection determination counter from the counter operation unit 44-1.

For example, it is assumed that the state of the signal line 6-1 becomes the "disconnection state", and the determination state of the signal line 6-1 becomes the disconnection release determination state 82, by passing through the processing of Sb6. In this state, when the determination processing unit 45-1 receives the value of the disconnection determination counter from the counter operation unit 44-1 again, the processing from Sb1 to Sb3 is performed. In the processing of Sb2, the determination processing unit 45-1 reads out the "disconnection state" as the state of the signal line 6-1. In the processing of Sb3, the determination processing unit 45-1 reads out the disconnection state allowable counter number. Here, it is assumed that, in the processing of Sb4, the determination processing unit 45-1 determines that the value of the disconnection determination counter is equal to or greater than the disconnection state allowable counter number. In this case, the processing of Sb5 is performed, and the determination processing unit 45-1 rewrites the state of the signal line 6-1 from the "disconnection state" to the "connection state" in the signal line state table 48. Therefore, in the state transition diagram shown in Fig. 10, the determination state of the signal line 6-1 transitions from the disconnection release determination state 82 to the disconnection determination state 81. For example, when the internal combustion engine control unit 41 detects that the "state" of the first signal line in the signal line state table 48 is rewritten from the "disconnection state" to the "connection state", the internal combustion engine control unit 41 notifies the outside that the disconnection of the signal line 6-1 is recovered, or in a case in which the protection operation is performed by the internal combustion engine 3, the internal combustion engine control unit 41 outputs a control signal for terminating the protection operation to the internal combustion engine 3 through the control signal line.

On the other hand, it is assumed that, in the processing of Sb4, the determination processing unit 45-1 determines that the value of the disconnection determination counter is not equal to or greater than the disconnection state allowable counter number. In this case, the processing of Sb6 is performed, and the determination processing unit 45-1 rewrites the state of the signal line 6-1 to the "disconnection state" in the signal line state table 48. However, here, the item of the "state" of the first signal line is the "disconnection state" before and after the rewriting. Therefore, in the state transition diagram shown in Fig. 10, the determination state of the signal line 6-1 is maintained in the disconnection release determination state 82.

It should be noted that, regarding the signal line disconnection state determination unit 43-2, in the processing of Figs. 11 and 12, the processing is performed by replacing the counter operation unit 44-1 with the counter operation unit 44-2, replacing the determination processing unit 45-1 with the determination processing unit 45-2, replacing the comparison circuit 20-1 with the comparison circuit 20-2, replacing the signal line 6-1 with the signal line 6-2, and replacing the first signal line with the second signal line.

### (Operations and Effects of Configuration of First Embodiment)

In the first embodiment, the pulse signal is generated from the voltage signal V₁ by the comparison circuit 20-1 provided in the ECU 1, more specifically, by the circuit configured by the filter circuit 21-1, the clipper circuit 22-1, the comparator 25-1, and the resistors 26-1 to 28-1. The pulse signal is subjected to screening in consideration of a change in the waveform that occurs in the voltage signal V₁ due to a difference in the disconnection portion of the signal lines 6-1 and 6-2, a difference in the number of disconnected signal lines 6-1 and 6-2, a difference in the environment in which the internal combustion engine 3 is operated, and the like, and becomes a signal indicating the presence or absence of the vibration with two values of Vₚ [V] and 0 [V]. More specifically, the screening is waveform shaping based on the removal of the low-frequency power supply noise by the filter circuit 21-1, the removal of the negative component by the clipper circuit 22-1, and the threshold value determination using the threshold voltage Vₜₕ by the comparator 25-1 and the resistors 26-1 to 28-1.

The rectangular signal included in the pulse signal generated by the waveform shaping is a good indicator for accuracy when determining whether or not the signal line 6-1 is disconnected, based on the vibration detected by the knock sensor 2. By using the rectangular signal, which is an indicator with high accuracy, it is possible to reduce a risk of erroneously detecting the presence or absence of the vibration and to prevent a detection failure of the vibration. The same applies to the comparison circuit 20-2 provided in the ECU 1, and the rectangular signal included in the pulse signal generated by the comparison circuit 20-2 is a good indicator for the accuracy when determining whether or not the signal line 6-2 is disconnected, based on the vibration detected by the knock sensor 2. That is, in the configuration in the first embodiment, the comparison circuit 20-1 corresponding to the signal line 6-1 and the comparison circuit 20-2 corresponding to the signal line 6-2 are provided without using the differential signal, it is determined whether or not each of the signal lines 6-1 and 6-2 is independently disconnected, and thus the above-described problem caused by the differential signal is solved. Therefore, it is possible to accurately determine the disconnection state of the signal lines 6-1 and 6-2 regardless of the disconnection portion of the signal lines 6-1 and 6-2, the number of disconnected signal lines 6-1 and 6-2, the environment in which the internal combustion engine 3 is operated, and the like.

Each of the signal line disconnection state determination units 43-1 and 43-2 of the signal processing unit 40 determines whether or not the corresponding signal lines 6-1 and 6-2 are disconnected, based on the number of cycles in which at least one cycle including the rectangular signal included in the output signal, that is, the pulse signal, output by the corresponding comparison circuits 20-1 and 20-2 is present in the predetermined number of consecutive cycles in the disconnection determination section. The reason why the presence or absence of the rectangular signal is determined in the disconnection determination section of each of the predetermined number of consecutive cycles is that the vibration of the internal combustion engine 3 does not have constant behavior. **In** other words, there is a possibility that the disconnection state may be erroneously determined only by determining the presence or absence of the rectangular signal in the disconnection determination section of one cycle. Therefore, the signal processing unit 40 can perform an accurate disconnection determination by determining the presence or absence of the rectangular signal in each disconnection determination section of the predetermined number of consecutive cycles by the signal line disconnection state determination units 43-1 and 43-2.

It should be noted that, in the above description, the predetermined number is an integer of 2 or more and is, for example, a value of about "100". The larger the predetermined number is, the higher the accuracy of determining whether or not the signal lines 6-1 and 6-2 are disconnected is. However, when the predetermined number is too large, the time required for the determination becomes longer. Therefore, it is desirable that the predetermined number is set to such an extent that the determination time in the signal line disconnection state determination units 43-1 and 43-2 is a practical time.

In the method of determining the disconnection using the "disconnection value" of the root mean square value of the differential signal described with reference to Fig. 19, it is not possible to specify which of the signal lines 6-1 and 6-2 is disconnected. Meanwhile, in the first embodiment, the comparison circuit 20-1 and the signal line disconnection state determination unit 43-1 are provided for the signal line 6-1, and the comparison circuit 20-2 and the signal line disconnection state determination unit 43-2 are provided for the signal line 6-2. Therefore, in the ECU 1 according to the first embodiment, it is possible to specify which of the signal lines 6-1 and 6-2 is disconnected.

In a case in which it is desired to electrically detect the disconnection of the signal lines 6-1 and 6-2, for example, a method of inserting a pull-down resistor or the like into the input terminal of the knock sensor 2 or a method of inserting a detection circuit into a path of the signal lines 6-1 and 6-2 can also be considered. However, in a case in which these methods are adopted, it is not possible to match the output impedance of the knock sensor 2, and there is a concern that the characteristics of the output signal of the knock sensor 2, which is a weak signal, that is, the charge signal may change. In contrast, in the first embodiment, since the comparison circuits 20-1 and 20-2 that are newly provided are provided in the rear stage of the charge amplifier circuits 10-1 and 10-2, it is possible to detect the disconnection of the signal lines 6-1 and 6-2 without affecting the characteristics of the charge signal output by the knock sensor 2.

The reason for making the allowable cycle number adopted in the determination of Sb4 in Fig. 12 different values between the "connection state" and the "disconnection state" is as follows. For example, when the internal combustion engine 3 is started or when a temporary large load is applied to the internal combustion engine 3, the internal combustion engine 3 becomes in an unstable state. In this unstable state, it is also assumed that the knock sensor 2 may detect the vibration at a lower frequency than in a case of a stable state in the disconnection determination section, that is, in the crank angle section at the time of valve seating. In this case, a frequency with which the counter operation unit 44-1 receives the output signal from the comparison circuit 20-1 decreases even though the signal line 6-1 is the connection state. Therefore, the determination processing unit 45-1 rewrites the state of the first signal line in the signal line state table 48 from the "connection state" to the "disconnection state", and the determination state of the signal line 6-1 may transition from the disconnection determination state 81 to the disconnection release determination state 82.

When the state reaches the disconnection release determination state 82, as described above, the internal combustion engine control unit 41 may cause the internal combustion engine 3 to start the protection operation. In this case, in determination in Sb4, when one allowable counter number is used, there is a concern that a long time may be required until the value of the disconnection determination counter is increased to be equal to or greater than the allowable cycle number in the state of the protection operation. Therefore, as described above, the allowable counter number corresponding to each of the connection state and the disconnection state is determined, and the disconnection state allowable counter number is set to a value smaller than the connection state allowable counter number. In other words, in the disconnection release determination state 82, a threshold level for determining whether or not the signal line 6-1 is disconnected is lowered. In this way, it is possible to transition from the disconnection release determination state 82 to the disconnection determination state 81 even when the number of cycles including the output signal of the comparison circuit 20-1 is small. As a result, in the determination of Sb4, the internal combustion engine control unit 41 can quickly stop the protection operation of the internal combustion engine 3 and return the internal combustion engine 3 to the stable state in which the internal combustion engine 3 performs a normal operation, as compared with a case in which one allowable counter number is used. It should be noted that, in a case in which the signal line 6-1 is actually disconnected, the value of the disconnection determination counter is not increased, so that the value of the disconnection determination counter is not equal to or greater than the disconnection state allowable counter number, and the disconnection release determination state 82 continues.

However, when the disconnection state allowable counter number is excessively small, there is a concern that the state transition between the disconnection determination state 81 and the disconnection release determination state 82 may occur frequently, or a problem occurs in which the state transitions to the disconnection determination state 81 even though the signal line 6-1 is actually disconnected. Therefore, it is necessary to determine the disconnection state allowable counter number to an appropriate value in order to prevent such a problem from occurring. It should be noted that the configuration in which the above-described disconnection state allowable counter number is made smaller than the connection state allowable counter number is an example, and the connection state allowable counter number and the disconnection state allowable counter number may be set to the same value, or the disconnection state allowable counter number may be set to a value greater than the connection state allowable counter number.

### <Second Embodiment>

### (Configuration of Second Embodiment)

A configuration in the second embodiment is the same as the configuration in the first embodiment except that the signal processing unit 40 in the ECU 1 shown in Fig. 2 is replaced with the signal processing unit 40a shown in Fig. 13. It should be noted that, hereinafter, the ECU 1 including the signal processing unit 40a instead of the signal processing unit 40 will be referred to as an ECU 1a for convenience of description. In addition, in the second embodiment, the same configurations as the configurations in the first embodiment are denoted by the same reference numerals. The signal processing unit 40a includes an internal combustion engine control unit 41a, the storage unit 42, signal line disconnection state determination units 43a-1 and 43a-2, and the preliminary determination units 46-1 and 46-2.

In the second embodiment, by newly providing the preliminary determination units 46-1 and 46-2, the determination state of the signal lines 6-1 and 6-2 makes a state transition shown in Fig. 14. It should be noted that the state transition of the determination state shown in Fig. 14 is also made independently in each of the signal lines 6-1 and 6-2, as in Fig. 10, and the determination state of the signal line 6-1 and the determination state of the signal line 6-2 may be the same determination state or may be different determination states.

In Fig. 14, a preliminary determination state 83 indicates that the signal lines 6-1 and 6-2 are in the connection state. The disconnection determination state 81a indicates a state in which the signal lines 6-1 and 6-2 are in the connection state, but the determination results of the preliminary determination units 46-1 and 46-2 indicate that there is a possibility that the signal lines 6-1 and 6-2 are disconnected. A disconnection release determination state 82a indicates that the signal lines 6-1 and 6-2 are in the disconnection state.

Each of the preliminary determination units 46-1 and 46-2 counts the number of times the corresponding comparison circuits 20-1 and 20-2 output the output signal in one disconnection determination section, that is, in one cycle disconnection determination section, for each disconnection determination section. Each of the preliminary determination units 46-1 and 46-2 determines whether or not to operate the corresponding signal line disconnection state determination units 43a-1 and 43a-2, based on the number of times counted in one disconnection determination section and a threshold value determined in advance.

Each of the counter operation units 44a-1 and 44a-2 has a configuration in which a configuration of performing the state transition added in the second embodiment described above is added to the counter operation units 44-1 and 44-2 according to the first embodiment. Each of the determination processing units 45a-1 and 45a-2 has a configuration in which a configuration of performing the state transition added in the second embodiment described above is added to the determination processing units 45-1 and 45-2 according to the first embodiment.

The internal combustion engine control unit 41a has a configuration in which the following configuration is added to the internal combustion engine control unit 41 according to the first embodiment. The internal combustion engine control unit 41a is configured to output a processing start signal to the preliminary determination units 46-1 and 46-2 at the time of start-up. The internal combustion engine control unit 41a is configured to output the disconnection determination section start signal and the disconnection determination section termination signal to the preliminary determination units 46-1 and 46-2.

Hereinafter, the processing of the preliminary determination units 46-1 and 46-2, the counter operation units 44a-1 and 44a-2, and the determination processing units 45a-1 and 45a-2 will be described with reference to the flowcharts of Figs. 15 to 17. In addition, the transition to any state in Fig. 14 will be described together in a process of the processing. It should be noted that the configuration in which the preliminary determination unit 46-1 and the signal line disconnection state determination unit 43a-1 are combined and the configuration in which the preliminary determination unit 46-2 and the signal line disconnection state determination unit 43a-2 are combined are the same in operation except for a difference in whether the target for the disconnection determination is the signal line 6-1 or the signal line 6-2, and thus, hereinafter, the operations of the preliminary determination unit 46-1 and the signal line disconnection state determination unit 43a-1 will be described.

### (Operation of Preliminary Determination Unit of Second Embodiment)

The preliminary determination unit 46-1 is started up when receiving the processing start signal. Here, there are cases in which the processing start signal is output by the internal combustion engine control unit 41a when the signal processing unit 40a is started up, that is, when the ECU 1a is started up, and a case in which the processing start signal is output by the determination processing unit 45a-1 in a process of the processing. Here, a case will be described in which the signal processing unit 40a is started up and the internal combustion engine control unit 41a outputs the processing start signal to the preliminary determination unit 46-1. The preliminary determination unit 46-1 captures the processing start signal output by the internal combustion engine control unit 41a (Sc1). Accordingly, the determination state of the signal line 6-1 shown in Fig. 14 becomes the preliminary determination state 83. It should be noted that, in the initial state, the item of the "state" of the signal line state table 48 of the storage unit 42 is the "connection state" in all cases.

The preliminary determination unit 46-1 initializes an in-section determination counter provided in the internal storage area to "0" (Sc2). The preliminary determination unit 46-1 waits until the disconnection determination section start signal from the internal combustion engine control unit 41a is received (Sc3). When the disconnection determination section start signal is received, the preliminary determination unit 46-1 monitors the output signal of the comparison circuit 20-1 for a certain time (Sc4). Here, a certain time is, for example, a time shorter than an average time length of one disconnection determination section, and is a short time to the extent that acquisition of one output signal is expected.

When a certain time has elapsed, the preliminary determination unit 46-1 determines whether or not the output signal from the comparison circuit 20-1 is acquired (Sc5). In a case in which it is determined that the output signal from the comparison circuit 20-1 is acquired (Sc5, Yes), the preliminary determination unit 46-1 increases a value of the in-section determination counter by the number of acquired output signals (Sc6). After the processing of Sc6, the preliminary determination unit 46-1 advances the processing to the processing of Sc7. On the other hand, in a case in which it is determined that the output signal from the comparison circuit 20-1 is not acquired (Sc5, No), the preliminary determination unit 46-1 advances the processing to the processing of Sc7.

The preliminary determination unit 46-1 determines whether or not the disconnection determination section termination signal from the internal combustion engine control unit 41a is received (Sc7). It should be noted that the preliminary determination unit 46-1 internally includes a queue-based buffer that accumulates the disconnection determination section start signal and the disconnection determination section termination signal output by the internal combustion engine control unit 41a in an order of the reception. It is assumed that the preliminary determination unit 46-1 determines that the disconnection determination section termination signal from the internal combustion engine control unit 41a is not received, with reference to the internal buffer (Sc7, No). In this case, the preliminary determination unit 46-1 performs the processing of Sc4 again.

On the other hand, it is assumed that the preliminary determination unit 46-1 determines that the disconnection determination section termination signal from the internal combustion engine control unit 41a is received, with reference to the internal buffer (Sc7, Yes). In this case, the preliminary determination unit 46-1 determines whether or not the value of the in-section determination counter is equal to or greater than a threshold value determined in advance (Sc8). Here, at a point in time when the preliminary determination unit 46-1 determines "Yes" in the processing of Sc7, the value indicated by the in-section determination counter indicates the number of times the comparison circuit 20-1 outputs the output signal in one disconnection determination section.

For example, it is assumed that the disconnection determination section indicated by a set of the disconnection determination section start signal and the disconnection determination section termination signal output by the internal combustion engine control unit 41a is the disconnection determination section 55-1 shown in Fig. 6. In this case, the output signals 61-1, 61-2, and 61-3 are present in the disconnection determination section 55-1. Therefore, the value of the in-section determination counter when the preliminary determination unit 46-1 performs the processing of Sc8 on the disconnection determination section 55-1 is "3".

In a case in which it is determined that the value of the in-section determination counter is equal to or greater than the threshold value (Sc8, Yes), the preliminary determination unit 46-1 performs the processing of and after Sc2 again. On the other hand, in a case in which it is determined that the value of the in-section determination counter is not equal to or greater than the threshold value (Sc8, No), the preliminary determination unit 46-1 outputs the processing start signal to the counter operation unit 44a-1 (Sc9) and terminates the processing. It should be noted that, in a case in which the preliminary determination unit 46-1 determines "Yes" in the processing of Sc8, the determination state of the signal line 6-1 is maintained in the preliminary determination state 83 in the state transition diagram of Fig. 14. On the other hand, in a case in which the preliminary determination unit 46-1 determines "No" in the processing of Sc8, the determination state of the signal line 6-1 transitions from the preliminary determination state 83 to the disconnection determination state 81a in the state transition diagram of Fig. 14.

As the threshold value in the processing of Sc8, any positive integer value may be applied. For example, in a case in which "1" is applied as the threshold value, when the comparison circuit 20-1 does not output any output signal in one disconnection determination section, the preliminary determination unit 46-1 determines "No" in the processing of Sc8. It is estimated that the state in which the comparison circuit 20-1 does not output any output signal is a state in which the signal line 6-1 is highly likely to be disconnected. Therefore, in this case, the determination state of the signal line 6-1 transitions from the preliminary determination state 83 to the disconnection determination state 81a, and the signal line disconnection state determination unit 43a-1 determines whether the signal line 6-1 is in the connection state or in the disconnection state.

### (Operation of Counter Operation Unit in Second Embodiment)

The counter operation unit 44a-1 is started up when receiving the processing start signal from the preliminary determination unit 46-1. The counter operation unit 44a-1 captures the processing start signal (Sd1). The counter operation unit 44a-1 initializes the disconnection determination counter and the cycle number counter provided in the internal storage area to "0" (Sd2). The counter operation unit 44a-1 waits until a signal from another functional unit of the signal processing unit 40a is received (Sd3). It should be noted that it is assumed that the counter operation unit 44a-1 includes a queue-based buffer that accumulates the signals output by another functional unit of the signal processing unit 40a in the order of the reception.

In a case in which the counter operation unit 44a-1 receives the signal from another functional unit of the signal processing unit 40a, that is, in a case in which the signal is accumulated in the internal buffer, the counter operation unit 44a-1 determines the type of the signal (Sd4). In a case in which it is determined that the type of the received signal is the "forced termination signal" (Sd4, forced termination signal), the counter operation unit 44a-1 terminates the processing. It should be noted that the forced termination signal is a signal output by the determination processing unit 45a-1. In a case in which it is determined that the type of the received signal is the "other signal" other than the forced termination signal and the disconnection determination section start signal (Sd4, others), the counter operation unit 44a-1 performs the processing of Sd3 again.

In a case in which it is determined that the type of the received signal is the "disconnection determination section start signal" (Sd4, disconnection determination section start signal), the counter operation unit 44a-1 advances the processing to the processing of Sd5. In the processing of Sd5 to Sd8, the same processing as the processing of Sa3 to Sa6 performed by the counter operation unit 44-1 according to the first embodiment shown in Fig. 11 is performed by the counter operation unit 44a-1. However, after the processing of Sd8, the processing is advanced to the processing of Sd11.

In a case in which the determination of "No" is made in the processing of Sd7, the counter operation unit 44a-1 determines whether or not the signal from another functional unit of the signal processing unit 40a is received (Sd9). In a case in which it is determined that the signal from another functional unit of the signal processing unit 40a is not received (Sd9, No), the counter operation unit 44a-1 performs the processing of Sd6 again. On the other hand, when it is determined that the signal from another functional unit of the signal processing unit 40a is received (Sd9, Yes), the counter operation unit 44a-1 determines the type of the received signal (Sd10), as in the processing of Sd4.

In a case in which it is determined that the type of the received signal is the "forced termination signal" (Sd10, forced termination signal), the counter operation unit 44a-1 terminates the processing. In a case in which it is determined that the type of the received signal is the "other signal" other than the forced termination signal and the disconnection determination section start signal (Sd10, others), the counter operation unit 44a-1 performs the processing of Sd6 again.

In a case in which it is determined that the type of the received signal is the "disconnection determination section termination signal" (Sd10, disconnection determination section termination signal), the counter operation unit 44a-1 advances the processing to the processing of Sd11. In the processing of Sd11 and Sd12, the same processing as the processing of Sa8 and Sa9 performed by the counter operation unit 44-1 according to the first embodiment shown in Fig. 11 is performed by the counter operation unit 44a-1. However, in a case in which the determination of "No" is made in the processing of Sd11, the processing is advanced to the processing of Sd3, and after the processing of Sd12, the processing is advanced to the processing of Sd2.

### (Operation of Determination Processing Unit of Second Embodiment)

The determination processing unit 45a-1 is started up when receiving the value of the disconnection determination counter from the counter operation unit 44a-1. In the processing of Se1 to Se4, the same processing as the processing Sb1 to Sb4 performed by the determination processing unit 45-1 according to the first embodiment shown in Fig. 12 is performed by the determination processing unit 45a-1.

In a case in which the determination processing unit 45a-1 performs the determination of "Yes" in the processing of Se4 (Se4, Yes), the determination processing unit 45a-1 rewrites the "state" of the signal line 6-1, that is, the first signal line, in the signal line state table 48 of the storage unit 42 to the "connection state" (Se5). In this case, when the item of the "state" of the first signal line is the "connection state" before being rewritten, the determination state of the signal line 6-1 transitions from the disconnection determination state 81a to the preliminary determination state 83 in the state transition diagram shown in Fig. 14, by rewriting to the "connection state" by the processing of Se5.

Therefore, the determination processing unit 45a-1 outputs the forced termination signal to the counter operation unit 44a-1 (Se6). When the forced termination signal from the determination processing unit 45a-1 is received, in the processing of Sd4 or Sd10 in Fig. 16, the counter operation unit 44a-1 determines that the type of the received signal is the "forced termination signal", and terminates the processing. The determination processing unit 45a-1 outputs the processing start signal to the preliminary determination unit 46-1, and causes the preliminary determination unit 46-1 to start the processing shown in Fig. 15 (Se7).

In contrast, when the item of the "state" of the first signal line is the "disconnection state" before being rewritten, the determination state of the signal line 6-1 transitions from the disconnection release determination state 82a to the preliminary determination state 83 in the state transition diagram shown in Fig. 14, by rewriting to the "connection state" by the processing of Se5. Similarly in this case, by the processing of Se6 and Se7, the processing of the counter operation unit 44a-1 is terminated, and the preliminary determination unit 46-1 is caused to start the processing.

It should be noted that the processing of Se5, Se6, and Se7 may be performed in the order of Se5, Se6, and Se7, or may be performed in an order in which the order of Se5, Se6, and Se7 is changed in any order.

On the other hand, in a case in which the determination processing unit 45a-1 performs the determination of "No" in the processing of Se4 (Se4, No), the determination processing unit 45a-1 rewrites the "state" of the signal line 6-1, that is, the first signal line, in the signal line state table 48 of the storage unit 42 to the "disconnection state" (Se8). In this case, in a case in which the item of the "state" of the first signal line is the "connection state" before being rewritten, the determination state of the signal line 6-1 transitions from the disconnection determination state 81a to the disconnection release determination state 82a in the state transition diagram shown in Fig. 14, by rewriting to the "disconnection state" by the processing of SE8.

In contrast, in a case in which the item of the "state" of the first signal line is the "disconnection state" before being rewritten, the determination state of the signal line 6-1 is maintained in the disconnection release determination state 82a in the state transition diagram shown in Fig. 14, by rewriting to the "disconnection state" by the processing of Se8.

It should be noted that, regarding the preliminary determination unit 46-2 and the signal line disconnection state determination unit 43a-2, in the processing of Figs. 15, 16, and 17, the processing is performed by replacing the preliminary determination unit 46-1 with the preliminary determination unit 46-2, replacing the counter operation unit 44a-1 with the counter operation unit 44a-2, replacing the determination processing unit 45a-1 with the determination processing unit 45a-2, replacing the comparison circuit 20-1 with the comparison circuit 20-2, replacing the signal line 6-1 with the signal line 6-2, and replacing the first signal line with the second signal line.

### (Operations and Effects of Configuration of Second Embodiment)

The ECU 1a according to the second embodiment can obtain the same operations and effects as the ECU 1 according to the first embodiment described above. Further, in the configuration of the signal processing unit 40a provided in the ECU 1a according to the second embodiment, the preliminary determination state 83 shown in Fig. 14 is added as the determination state of the signal lines 6-1 and 6-2. By adding the preliminary determination state 83, the signal processing unit 40a according to the second embodiment has the following operations and effects different from those of the signal processing unit 40 according to the first embodiment.

In the first embodiment, the counter operation units 44-1 and 44-2 operate without being terminated, and the determination processing units 45-1 and 45-2 operate in parallel while the counter operation units 44-1 and 44-2 operate. The states of the signal lines 6-1 and 6-2 are almost the connection state, and the frequency with which the signal lines 6-1 and 6-2 are in the disconnection state is very short as compared with the time in the connection state. Considering the state of the signal lines 6-1 and 6-2, the processing performed by the signal processing unit 40 according to the first embodiment has a large load, and, when the counter operation units 44-1 and 44-2 operate, a storage capacity for two counters, that is, a storage capacity for the disconnection determination counter and a storage capacity for the cycle number counter, are also required as the storage capacity for the counter.

In contrast, in the signal processing unit 40a according to the second embodiment, the preliminary determination state 83 is provided, so that only the preliminary determination units 46-1 and 46-2 operate while the signal lines 6-1 and 6-2 are in the connection state, and thus the processing load is reduced as compared with the signal processing unit 40 according to the first embodiment. In addition, when the preliminary determination units 46-1 and 46-2 operate, only the storage capacity of one counter, such as the in-section determination counter, need only be secured, so that there is an advantage that the storage capacity to be used can be reduced as compared with the counter operation units 44-1 and 44-2 according to the first embodiment.

### (Other Configuration Examples of First and Second Embodiments)

In the first and second embodiments, the signal processing units 40 and 40a are provided, and it is determined whether or not the signal lines 6-1 and 6-2 are disconnected, by performing the processing shown in Figs. 11, 12, 15, 16, and 17. In contrast, instead of the signal processing units 40 and 40a, a signal processing unit may be provided, which determines whether or not the signal lines 6-1 and 6-2 are disconnected, based on whether or not at least one output signal output by the comparison circuits 20-1 and 20-2 is present or whether or not a plurality of predetermined numbers of output signals are present for each disconnection determination section. In a case in which such a signal processing unit is used, the accuracy related to the disconnection determination is reduced as compared with the signal processing units 40 and 40a, but it is possible to determine whether or not the signal lines 6-1 and 6-2 are disconnected, by simple processing as compared with the signal processing units 40 and 40a.

In the first and second embodiments, in the processing shown in Sb4 of Fig. 12, Sc8 of Fig. 15, and Se4 of Fig. 17, the determination processing using the equal sign and the unequal sign is performed. However, the present disclosure is not limited to the embodiments, and the determination processing regarding "whether or not being equal to or greater than" is merely an example, and may be replaced with the determination processing regarding "whether or not exceeding" depending on how the threshold value is determined.

The embodiments of the present disclosure have been described above in detail with reference to the drawings, but the specific configuration is not limited to the embodiments, and the present disclosure includes design not departing from the scope of the present disclosure.

### (Configuration of Computer)

Fig. 18 is a schematic block diagram showing a configuration of the computer for implementing each of the signal processing units 40 and 40a according to the first and second embodiments. The computer 90 includes a processor 91, a main memory 92, a storage 93, and an interface 94. The internal combustion engine control units 41 and 41a, the storage unit 42, the counter operation units 44-1, 44-2, 44a-1, and 44a-2, the determination processing units 45-1, 45-2, 45a-1, and 45a-2, and the preliminary determination units 46-1 and 46-2 provided in the signal processing units 40 and 40a are installed on the computer 90. The operations of the functional units are stored in the storage 93 in a form of a program. The processor 91 reads out the program from the storage 93, loads the program in the main memory 92, and executes the processing shown in Figs. 11, 12, 15, 16, and 17 according to the program. In addition, the processor 91 secures the storage area corresponding to the storage unit 42 in the main memory 92 according to the program. In addition, the comparison circuits 20-1 and 20-2 and the differential amplifier circuit 30 are connected to the interface 94, and the processor 91 captures the pulse signals output by the comparison circuits 20-1 and 20-2 and the differential signal output by the differential amplifier circuit 30 via the interface 94.

The program may be for implementing some of the functions to be exhibited by the computer 90. For example, the program may exhibit a function in combination with another program already stored in a storage or in combination with another program installed in another device. In another embodiment, the computer may include a custom large scale integrated (LSI) circuit such as a programmable logic device (PLD) in addition to or instead of the above-described configuration. Examples of the PLD include a programmable array logic (PAL), a generic array logic (GAL), a complex programmable logic device (CPLD), and a field programmable gate array (FPGA). In this case, some or all of the functions implemented by the processor may be implemented by the integrated circuit.

Examples of the storage 93 include a hard disk drive (HDD), a solid state drive (SSD), a magnetic disk, a magneto-optical disk, a compact disc read-only memory (CD-ROM), a digital versatile disc read- only memory (DVD-ROM), and a semiconductor memory. The storage 93 may be an internal medium directly connected to a bus of the computer 90 or may be an external medium connected to the computer 90 via the interface 94 or a communication line. In addition, in a case in which this program is distributed to the computer 90 via the communication line, the computer 90 that has received the distribution may load the program in the main memory 92 to execute the above-described processing. In addition, the storage 93 is a non-transitory tangible storage medium.

### <Supplementary Note>

The ECUs 1 and 1a that are the control device for the internal combustion engine 3 described in each embodiment are understood as follows, for example.
(1) A first aspect relates to a control device (for example, ECUs 1 and 1a) for an internal combustion engine (for example, internal combustion engine 3), the control device including: a first comparison circuit (for example, comparison circuit 20-1) that compares a first voltage signal with a threshold voltage (for example, threshold voltage Vₜₕ), the first voltage signal being generated from a first charge signal which is output to a first signal line (for example, signal line 6-1) by a vibration sensor (for example, knock sensor 2) mounted on an internal combustion engine and which indicates magnitude of vibration detected by the vibration sensor, and that outputs an output signal of a constant value in a case in which the first voltage signal exceeds the threshold voltage; a second comparison circuit (for example, comparison circuit 20-2) that compares a second voltage signal with the threshold voltage, the second voltage signal being generated from a second charge signal which is output to a second signal line (for example, signal line 6-2) by the vibration sensor and which is an inverted signal of the first charge signal, and that outputs an output signal of a constant value in a case in which the second voltage signal exceeds the threshold voltage; and a signal processing unit (for example, signal processing units 40 and 40a) that detects a disconnection state in the first signal line and the second signal line based on the output signal output by each of the first comparison circuit and the second comparison circuit. According to the present aspect, it is possible to accurately determine the disconnection state of each of the signal lines 6-1 and 6-2 regardless of the disconnection portion of the signal lines 6-1 and 6-2, the number of disconnected signal lines 6-1 and 6-2, the environment in which the internal combustion engine 3 is operated, and the like.
(2) A second aspect relates to the control device for an internal combustion engine according to (1), in which each of the first comparison circuit and the second comparison circuit includes a comparator (for example, comparators 25-1 and 25-2) that compares the threshold voltage with a voltage signal that is a comparison target, and a filter circuit (for example, filter circuits 21-1 and 21-2) that removes power supply noise from the voltage signal that is the comparison target, before the comparator performs comparison with the threshold voltage. According to the present aspect, it is possible to improve the accuracy of the disconnection determination by removing the power supply noise.
(3) A third aspect relates to the control device for an internal combustion engine according to (2), in which each of the first comparison circuit and the second comparison circuit includes a clipper circuit (for example, clipper circuits 22-1 and 22-2) that removes a negative component from the voltage signal from which the power supply noise is removed by the filter circuit, before the comparator performs comparison with the threshold voltage. According to the present aspect, it is possible to improve the accuracy of the disconnection determination by removing the negative component.
(4) A fourth aspect relates to the control device for an internal combustion engine according to (2) or (3), further including: a first charge amplifier circuit (for example, charge amplifier circuit 10-1) that is connected to the first signal line and that generates a voltage signal to be supplied to the filter circuit of the first comparison circuit from the first charge signal; and a second charge amplifier circuit (for example, charge amplifier circuit 10-2) that is connected to the second signal line and that generates a voltage signal to be supplied to the filter circuit of the second comparison circuit from the second charge signal. According to the present aspect, it is possible to amplify the weak charge signal and to convert the weak charge signal into a voltage signal proportional to the magnitude of the charge signal.
(5) A fifth aspect relates to the control device for an internal combustion engine according to (1), in which the signal processing unit includes a first signal line disconnection state determination unit (for example, signal line disconnection state determination units 43-1 and 43a-1) that counts the number of cycles in which the first comparison circuit outputs at least one output signal in a disconnection determination section in each of a predetermined number of consecutive cycles of the internal combustion engine, and that performs determination processing of determining whether or not the first signal line is disconnected, based on the counted number of cycles and an allowable cycle number, and a second signal line disconnection state determination unit (for example, signal line disconnection state determination units 43-2 and 43a-2) that counts the number of cycles in which the second comparison circuit outputs at least one output signal in a disconnection determination section in each of the predetermined number of consecutive cycles, and that performs determination processing of determining whether or not the second signal line is disconnected, based on the counted number of cycles and the allowable cycle number. According to the present aspect, for example, in a case in which the vibration of the internal combustion engine 3 does not have constant behavior, it is possible to accurately determine the disconnection state of each of the signal lines 6-1 and 6-2.
(6) A sixth aspect relates to the control device for an internal combustion engine according to (5), in which the signal processing unit includes a first preliminary determination unit (for example, preliminary determination unit 46-1) that performs in-section count operation processing of counting the number of times the first comparison circuit outputs the output signal in the disconnection determination section in one cycle of the internal combustion engine, that determines whether or not to cause the first signal line disconnection state determination unit (for example, signal line disconnection state determination unit 43a-1) to start the determination processing based on the number of times counted in the one cycle and a predetermined threshold value, that stops itself in a case of causing the first signal line disconnection state determination unit to start the determination processing, and that performs the in-section count operation processing on a next cycle in a case of not causing the first signal line disconnection state determination unit to start the determination processing, and a second preliminary determination unit (for example, preliminary determination unit 46-2) that performs in-section count operation processing of counting the number of times the second comparison circuit outputs the output signal in the disconnection determination section in one cycle of the internal combustion engine, that determines whether or not to cause the second signal line disconnection state determination unit (for example, signal line disconnection state determination unit 43a-2) to start the determination processing based on the number of times counted in the one cycle and a predetermined threshold value, that stops itself in a case of causing the second signal line disconnection state determination unit to start the determination processing, and that performs the in-section count operation processing on a next cycle in a case of not causing the second signal line disconnection state determination unit to start the determination processing, the first signal line disconnection state determination unit causes the first preliminary determination unit to start the in-section count operation processing and stops itself in a case in which it is determined that a state of the first signal line is a non-disconnected state, and the second signal line disconnection state determination unit causes the second preliminary determination unit to start the in-section count operation processing and stops itself in a case in which it is determined that a state of the second signal line is a non-disconnected state. According to the present aspect, for example, the signal line disconnection state determination units 43a-1 and 43a-2 perform the determination processing only in a case in which the signal lines 6-1 and 6-2 are disconnected or in a case in which the signal lines 6-1 and 6-2 may be disconnected, and the preliminary determination units 46-1 and 46-2 perform the processing in a case in which the signal lines 6-1 and 6-2 are in a stable connection state, so that the load can be reduced, and the storage capacity of the counter can be reduced.
(7) A seventh aspect relates to the control device for an internal combustion engine according to (5) or (6), in which each of the first signal line disconnection state determination unit and the second signal line disconnection state determination unit sets the allowable cycle number to be used in a case in which a state of a signal line corresponding to each of the first signal line disconnection state determination unit and the second signal line disconnection state determination unit is a disconnected state and the allowable cycle number to be used in a case in which a state of a signal line corresponding to each of the first signal line disconnection state determination unit and the second signal line disconnection state determination unit is a non-disconnected state, to the same number or different numbers. According to the present aspect, for example, by using different allowable cycle numbers between a case in which the signal line is disconnected and a case in which the signal line is not disconnected, when the internal combustion engine 3 is started or when a temporary large load is applied to the internal combustion engine 3, even though the signal lines 6-1 and 6-2 are determined to be disconnected although the signal lines 6-1 and 6-2 are not disconnected, the signal lines 6-1 and 6-2 can be quickly restored to an original state in which the signal lines 6-1 and 6-2 are determined to be not disconnected.

### Industrial Applicability

According to the above-described aspects, it is possible to accurately determine the disconnection state of each signal line regardless of the disconnection portion of the signal line, the number of disconnected signal lines, the environment in which the internal combustion engine is operated, and the like.

### Reference Signs List

1: ECU
2: knock sensor
3: internal combustion engine
4: internal combustion engine cylinder
5: cylinder head
6-1, 6-2: signal line
10-1, 10-2: charge amplifier circuit
11-1, 11-2: operational amplifier
12-1, 12-2, 15: resistor
13-1, 13-2: capacitor
20-1, 20-2: comparison circuit
21-1, 21-2: filter circuit
22-1, 22-2: clipper circuit
23-1, 23-2, 24-1, 24-2: diode
25-1, 25-2: comparator
26-1, 26-2, 27-1, 27-2, 28-1, 28-2: resistor
29-1, 29-2: input processing circuit
30: differential amplifier circuit
32-1, 32-2: resistor
33: operational amplifier
34: input processing circuit
40: signal processing unit
41: internal combustion engine control unit
42: storage unit
43-1, 43-2: signal line disconnection state determination unit
44-1, 44-2: counter operation unit
45-1, 45-2: determination processing unit
46-1, 46-2: preliminary determination unit
100: internal combustion engine control system

## Claims

1. A control device for an internal combustion engine, the control device comprising:
a first comparison circuit that compares a first voltage signal with a threshold voltage, the first voltage signal being generated from a first charge signal which is output to a first signal line by a vibration sensor mounted on an internal combustion engine and which indicates magnitude of vibration detected by the vibration sensor, and that outputs an output signal of a constant value in a case in which the first voltage signal exceeds the threshold voltage;
a second comparison circuit that compares a second voltage signal with the threshold voltage, the second voltage signal being generated from a second charge signal which is output to a second signal line by the vibration sensor and which is an inverted signal of the first charge signal, and that outputs an output signal of a constant value in a case in which the second voltage signal exceeds the threshold voltage; and
a signal processing unit that detects a disconnection state in the first signal line and the second signal line based on the output signal output by each of the first comp arison circuit and the second comparison circuit.

2. The control device for an internal combustion engine according to Claim 1,
wherein each of the first comparison circuit and the second comparison circuit includes
a comparator that compares the threshold voltage with a voltage signal that is a comparison target, and
a filter circuit that removes power supply noise from the voltage signal that is the comparison target, before the comparator performs comparison with the threshold voltage.

3. The control device for an internal combustion engine according to Claim 2,
wherein each of the first comparison circuit and the second comparison circuit includes
a clipper circuit that removes a negative component from the voltage signal from which the power supply noise is removed by the filter circuit, before the comparator performs comparison with the threshold voltage.

4. The control device for an internal combustion engine according to Claim 2 or 3, further comprising:
a first charge amplifier circuit that is connected to the first signal line and that generates a voltage signal to be supplied to the filter circuit of the first comparison circuit from the first charge signal; and
a second charge amplifier circuit that is connected to the second signal line and that generates a voltage signal to be supplied to the filter circuit of the second comparison circuit from the second charge signal.

5. The control device for an internal combustion engine according to Claim 1,
wherein the signal processing unit includes
a first signal line disconnection state determination unit that counts the number of cycles in which the first comparison circuit outputs at least one output signal in a disconnection determination section in each of a predetermined number of consecutive cycles of the internal combustion engine, and that performs determination processing of determining whether or not the first signal line is disconnected, based on the counted number of cycles and an allowable cycle number, and
a second signal line disconnection state determination unit that counts the number of cycles in which the second comparison circuit outputs at least one output signal in a disconnection determination section in each of the predetermined number of consecutive cycles, and that performs determination processing of determining whether or not the second signal line is disconnected, based on the counted number of cycles and the allowable cycle number.

6. The control device for an internal combustion engine according to Claim 5,
wherein the signal processing unit includes
a first preliminary determination unit that performs in-section count operation processing of counting the number of times the first comparison circuit outputs the output signal in the disconnection determination section in one cycle of the internal combustion engine, that determines whether or not to cause the first signal line disconnection state determination unit to start the determination processing based on the number of times counted in the one cycle and a predetermined threshold value, that stops itself in a case of causing the first signal line disconnection state determination unit to start the determination processing, and that performs the in-section count operation processing on a next cycle in a case of not causing the first signal line disconnection state determination unit to start the determination processing, and
a second preliminary determination unit that performs in-section count operation processing of counting the number of times the second comparison circuit outputs the output signal in the disconnection determination section in one cycle of the internal combustion engine, that determines whether or not to cause the second signal line disconnection state determination unit to start the determination processing based on the number of times counted in the one cycle and a predetermined threshold value, that stops itself in a case of causing the second signal line disconnection state determination unit to start the determination processing, and that performs the in-section count operation processing on a next cycle in a case of not causing the second signal line disconnection state determination unit to start the determination processing,
the first signal line disconnection state determination unit
causes the first preliminary determination unit to start the in-section count operation processing and stops itself in a case in which it is determined that a state of the first signal line is a non-disconnected state, and
the second signal line disconnection state determination unit
causes the second preliminary determination unit to start the in-section count operation processing and stops itself in a case in which it is determined that a state of the second signal line is a non-disconnected state.

7. The control device for an internal combustion engine according to Claim 5 or 6,
wherein each of the first signal line disconnection state determination unit and the second signal line disconnection state determination unit
sets the allowable cycle number to be used in a case in which a state of a signal line corresponding to each of the first signal line disconnection state determination unit and the second signal line disconnection state determination unit is a disconnected state and the allowable cycle number to be used in a case in which a state of a signal line corresponding to each of the first signal line disconnection state determination unit and the second signal line disconnection state determination unit is a non-disconnected state, to the same number or different numbers.

8. A control method for an internal combustion engine, the control method comprising:
a step of comparing a first voltage signal with a threshold voltage, the first voltage signal being generated from a first charge signal which is output to a first signal line by a vibration sensor mounted on an internal combustion engine and which indicates magnitude of vibration detected by the vibration sensor, and outputting an output signal of a constant value in a case in which the first voltage signal exceeds the threshold voltage;
a step of comparing a second voltage signal with the threshold voltage, the second voltage signal being generated from a second charge signal which is output to a second signal line by the vibration sensor and which is an inverted signal of the first charge signal, and outputting an output signal of a constant value in a case in which the second voltage signal exceeds the threshold voltage; and
a step of detecting a disconnection state in the first signal line and the second signal line based on the output signal output by each of the step of outputting the output signal of a constant value in a case in which the first voltage signal exceeds the threshold voltage and the step of outputting the output signal of a constant value in a case in which the second voltage signal exceeds the threshold voltage.

9. A program causing a computer provided in a control device for an internal combustion engine, the control device including:
a first comparison circuit that compares a first voltage signal with a threshold voltage, the first voltage signal being generated from a first charge signal which is output to a first signal line by a vibration sensor mounted on an internal combustion engine and which indicates magnitude of vibration detected by the vibration sensor, and that outputs an output signal of a constant value in a case in which the first voltage signal exceeds the threshold voltage; and
a second comparison circuit that compares a second voltage signal with the threshold voltage, the second voltage signal being generated from a second charge signal which is output to a second signal line by the vibration sensor and which is an inverted signal of the first charge signal, and that outputs an output signal of a constant value in a case in which the second voltage signal exceeds the threshold voltage,
to function as:
signal processing means for detecting a disconnection state in the first signal line and the second signal line based on the output signal output by each of the first comparison circuit and the second comparison circuit.
